# EUROPEAN PATENT APPLICATION

(11) **EP 4 772 672 A1**
(43) Date of publication of application: **08.07.2026**
(21) Application number: 24879467.9
(22) Date of filing: 12.09.2024
(51) Int. Cl.: C23C 28/00, C09D 1/00, C09D 1/02, C09D 5/00, C09D 5/08, C09D 7/61, C09D 7/65, C09D 175/04, C09D 183/06, C23C 22/60

(54) **SURFACE TREATMENT LIQUID FOR GALVANIZED STEEL SHEETS, METHOD FOR PRODUCING GALVANIZED STEEL SHEET WITH SURFACE TREATMENT COATING FILM, AND GALVANIZED STEEL SHEET WITH SURFACE TREATMENT COATING FILM**

(30) Priority: 19.10.2023 JP 2023180487
(71) Applicant: JFE Steel Corporation, Tokyo 100-0011 (JP)
(72) Inventor: OKAI, Kazuhisa, Tokyo 100-0011 (JP); ENDO, Reona, Tokyo 100-0011 (JP); MURAMATSU, Naoki, Tokyo 100-0011 (JP)
(74) Representative: Hoffmann Eitle
(86) International application number: PCT/JP2024/032772
(87) International publication number: WO 2025/084040

(57) **Abstract**

Provided is a surface-treatment solution for a galvanized steel sheet that has excellent storage stability and that can be used to produce a galvanized steel sheet with a surface-coating layer that has excellent long-term perspiration resistance and planar part anti-corrosion property. The surface-treatment solution for galvanized steel sheet includes a first surface-treatment solution (X) and a second surface-treatment solution (Y). The first surface-treatment solution (X) contains a silane coupling agent (A) having a glycidyl group, a tetraalkoxysilane (B), a zirconium carbonate compound (C), a sodium silicate (D1), a vanadium compound (E), a molybdic acid compound (F), and water, the contents of which satisfy defined relationships. The second surface-treatment solution (Y) contains a sodium silicate (D2), an anionic polyurethane resin (G), and water, the contents of which satisfy defined relationships.

## Description

### TECHNICAL FIELD

The present disclosure relates to a surface-treatment solution for a galvanized steel sheet, a method of producing a galvanized steel sheet with a surface-coating layer, and a galvanized steel sheet with a surface-coating layer.

### BACKGROUND

Galvanized steel sheets, which have a zinc or zinc alloy coated or plated layer on a surface of a base steel sheet, have excellent corrosion resistance and are therefore used in a variety of applications, such as automobiles, home appliances, office automation equipment, and construction materials. Further, it is known that when a zinc alloy coated or plated layer contains aluminum and/or magnesium as a component other than zinc, better corrosion resistance is exhibited than a zinc coated or plated layer made of zinc.

However, a phenomenon has been confirmed that when a person's hand directly touches the surface of a zinc or zinc alloy coated or plated layer, the portion touched by the hand turns black over time (black discoloration phenomenon). This is thought to be due to oxidation of the surface of the zinc or zinc alloy coated or plated layer caused by the adhesion of sweat components, and it is known that this phenomenon is particularly likely to occur in the case of zinc alloy coated or plated layers that contain aluminum and/or magnesium. Therefore, there is a demand for a galvanized steel sheet that does not undergo the black discoloration phenomenon even when sweat is adhered, that is, a galvanized steel sheet that has excellent perspiration resistance.

In Patent Literature (PTL) 1, a method is described of producing a galvanized steel sheet with a surface-coating layer, which includes forming a surface-coating layer on a surface of a galvanized steel sheet using a surface-treatment solution for galvanized steel sheets. The surface-treatment solution contains a silane coupling agent having a glycidyl group, a tetraalkoxysilane, a sodium silicate, a zirconium carbonate compound, an anionic polyurethane resin having a glass transition temperature (Tg) of 80 °C to 130 °C, a vanadium compound, a molybdic acid compound, and water, and has a pH of 8.0 to 10.0, and contents of the components satisfy defined relationships. This production method makes it possible to produce a galvanized steel sheet with a surface-coating layer that excels in all of heat discoloration resistance, heat cracking resistance, planar part anti-corrosion property, corrosion resistance after alkaline degreasing, blackening resistance, anti-water stain property, solvent resistance, perspiration resistance, and coating adhesion property.

### CITATION LIST

### Patent Literature

PTL 1: JP 2018-062710 A

### SUMMARY

### (Technical Problem)

However, when the inventors studied the galvanized steel sheet with the surface-coating layer proposed in PTL 1, they found that perspiration resistance over a long period (long-term perspiration resistance) was insufficient and that there was room for improvement in the long-term perspiration resistance.

In view of the above problem, it would be helpful to provide a surface-treatment solution for a galvanized steel sheet that is capable of producing a galvanized steel sheet with a surface-coating layer that excels in all of heat discoloration resistance, heat cracking resistance, planar part anti-corrosion property, worked portion corrosion resistance, corrosion resistance after alkaline degreasing, blackening resistance, anti-water stain property, solvent resistance, long-term perspiration resistance, and coating adhesion property, and that has excellent storage stability. It would also be helpful to provide a method of producing a galvanized steel sheet with a surface-coating layer using the surface-treatment solution for a galvanized steel sheet, and a galvanized steel sheet with a surface-coating layer produced by the production method.

### (Solution to Problem)

In order to solve the aforementioned problems, the inventors conducted intensive studies and made the following discoveries. By using a layered structure for the surface-coating layer, the penetration of sweat components can be greatly reduced. Specifically, a first coating having coating components that satisfy at least conventional properties other than long-term perspiration resistance is formed on a surface of a galvanized steel sheet. The first coating contains a sodium silicate in addition to a silane coupling agent having a glycidyl group, a tetraalkoxysilane, and a zirconium carbonate compound, which promotes the formation of a Si-enriched layer in a surface layer, improving long-term perspiration resistance. Then, a second coating having coating components specialized for barrier properties against sweat components is formed on the first coating. The second coating contains an anionic polyurethane resin, which provides a high barrier property against sweat components, and a sodium silicate, which provides strong adhesion to the first coating that has the Si-enriched layer, thereby significantly improving the long-term perspiration resistance.

Primary features of the present disclosure are as follows.
[1] A surface-treatment solution for a galvanized steel sheet, comprising a first surface-treatment solution (X) and a second surface-treatment solution (Y), wherein
   the first surface-treatment solution (X) contains a silane coupling agent (A) having a glycidyl group, a tetraalkoxysilane (B), a zirconium carbonate compound (C), a sodium silicate (D1), a vanadium compound (E), a molybdic acid compound (F), and water, and the contents of the respective components satisfy the following (1) to (6), and
   the second surface-treatment solution (Y) contains a sodium silicate (D2), an anionic polyurethane resin (G), and water, and the contents of the respective components satisfy the following (7) and (8),
      (1) a mass ratio (A_{S}/X_{S}) of a solid content mass (A_{S}) of the silane coupling agent (A) having a glycidyl group to a total mass (X_{S}) of the solid content mass (A_{S}) of the silane coupling agent (A) having a glycidyl group, a solid content mass (B_{S}) of the tetraalkoxysilane (B), and a ZrO₂ equivalent mass (C_{Z}) of the zirconium carbonate compound (C), is 0.050 to 0.450,
      (2) a mass ratio (B_{S}/X_{S}) of the solid content mass (B_{S}) of the tetraalkoxysilane (B) to the total mass (X_{S}) is 0.010 to 0.190,
      (3) a mass ratio (C_{Z}/X_{S}) of the ZrO₂ equivalent mass (C_{Z}) of the zirconium carbonate compound (C) to the total mass (X_{S}) is 0.460 to 0.910,
      (4) a mass ratio (D1_{S}/X_{S}) of a solid content mass (D1_{S}) of the sodium silicate (D1) to the total mass (X_{S}) is 0.040 to 0.630,
      (5) a mass ratio (E_{V}/(X_{S} + D1_{S})) of a V equivalent mass (E_{V}) of the vanadium compound (E) to a total mass (X_{S} + D1_{S}) of the total mass (X_{S}) and the solid content mass (D1_{S}) of the sodium silicate (D1) is 0.006 to 0.094,
      (6) a mass ratio (F_{M}/(X_{S} + D1_{S})) of a Mo equivalent mass (F_{M}) of the molybdic acid compound (F) to the total mass (X_{S} + D1_{S}) of the total mass (X_{S}) and the solid content mass (D1_{S}) of the sodium silicate (D1) is 0.030 to 0.280,
      (7) a mass ratio (D2_{S}/G_{S}) of a solid content mass (D2_{S}) of the sodium silicate (D2) to a solid content mass (G_{S}) of the anionic polyurethane resin (G) is 0.010 to 0.100, and
      (8) a mass ratio (G_{S}/Y_{S}) of the solid content mass (G_{S}) of the anionic polyurethane resin (G) to a solid content mass (Y_{S}) of the second surface-treatment solution (Y) is 0.900 to 0.980.
[2] The surface-treatment solution for a galvanized steel sheet according to [1], wherein, in the second surface-treatment solution (Y), the anionic polyurethane resin (G) contains an anionic polyurethane resin having a carbonate backbone, and the content thereof satisfies the following (9),
   (9) a mass ratio of a solid content mass of the anionic polyurethane resin having a carbonate backbone to the solid content mass (G_{S}) of the anionic polyurethane resin (G) is 0.20 to 0.80.
[3] The surface-treatment solution for a galvanized steel sheet according to [1] or [2], wherein the second surface-treatment solution (Y) further contains a silicone resin (H), and the content thereof satisfies the following (10),
   (10) a mass ratio (H_{S}/G_{S}) of a solid content mass (H_{S}) of the silicone resin (H) to the solid content mass (G_{S}) of the anionic polyurethane resin (G) is 0.0030 to 0.0400.
[4] The surface-treatment solution for a galvanized steel sheet according to any one of [1] to [3], wherein the second surface-treatment solution (Y) further contains a crosslinking agent (I), and the content thereof satisfies the following (11),
   (11) a mass ratio (I_{S}/G_{S}) of a solid content mass (I_{S}) of the crosslinking agent (I) to the solid content mass (G_{S}) of the anionic polyurethane resin (G) is 0.0030 to 0.0400.
[5] The surface-treatment solution for a galvanized steel sheet according to any one of [1] to [4], wherein the second surface-treatment solution (Y) further contains a wax (L), and the content thereof satisfies the following (12),
   (12) a mass ratio (L_{S}/Y_{S}) of a solid content mass (L_{S}) of the wax (L) to the solid content mass (Y_{S}) of the second surface-treatment solution (Y) is 0.010 to 0.120.
[6] The surface-treatment solution for a galvanized steel sheet according to any one of [1] to [5], wherein the first surface-treatment solution (X) further contains a phosphoric acid compound (J), and the content thereof satisfies the following (13),
   (13) a mass ratio (J_{S}/X_{S}) of a solid content mass (J_{S}) of the phosphoric acid compound (J) to the total mass (X_{S}) is 0.140 to 0.770.
[7] The surface-treatment solution for a galvanized steel sheet according to any one of [1] to [6], wherein the first surface-treatment solution (X) further contains a fluorine compound (K), and the content thereof satisfies the following (14),
   (14) a mass ratio (K_{S}/X_{S}) of a solid content mass (K_{S}) of the fluorine compound (K) to the total mass (X_{S}) is 0.040 to 0.610.
[8] A method of producing a galvanized steel sheet with a surface-coating layer using the surface-treatment solution for a galvanized steel sheet according to any one of [1] to [7], the method comprising:
   applying the first surface-treatment solution (X) to a surface of a galvanized steel sheet;
   subsequently drying the applied first surface-treatment solution (X) to form a first coating;
   subsequently applying the second surface-treatment solution (Y) to a surface of the first coating; and
   subsequently drying the applied second surface-treatment solution (Y) to form a second coating.
[9] The method of producing a galvanized steel sheet with a surface-coating layer according to [8], wherein a coating weight of the first coating is 0.010 g/m² to 0.400 g/m², and a coating weight of the second coating is 0.20 g/m² to 3.00 g/m².
[10] A galvanized steel sheet with a surface-coating layer, produced by the method of producing a galvanized steel sheet with a surface-coating layer according to [8] or [9].
[11] The galvanized steel sheet with a surface-coating layer according to [10], wherein the galvanized steel sheet is a hot-dip Zn-Al alloy coated steel sheet having, on at least one surface of a base steel sheet as a substrate, a hot-dip Zn-Al alloy coated layer having a chemical composition, in mass%, containing (consisting of) Al: 3.0 % to 12.0 %, Mg: 0.2 % to 6.0 %, and Ni: 0.0 % to 0.1 %, with the balance being Zn and inevitable impurity.

### (Advantageous Effect)

According to the present disclosure, it is possible to provide a surface-treatment solution for a galvanized steel sheet that is capable of producing a galvanized steel sheet with a surface-coating layer that excels in all of heat discoloration resistance, heat cracking resistance, planar part anti-corrosion property, worked portion corrosion resistance, corrosion resistance after alkaline degreasing, blackening resistance, anti-water stain property, solvent resistance, long-term perspiration resistance, and coating adhesion property, and that has excellent storage stability. The present disclosure also provides a method of producing a galvanized steel sheet with a surface-coating layer using the surface-treatment solution for a galvanized steel sheet, and a galvanized steel sheet with a surface-coating layer produced by the production method.

### DETAILED DESCRIPTION

Hereinafter, embodiments of the surface-treatment solution for a galvanized steel sheet, the method of producing a galvanized steel sheet with a surface-coating layer, and the galvanized steel sheet with a surface-coating layer according to the present disclosure are described. The embodiments described below are example embodiments of the present disclosure, and do not limit configuration to the specific examples described.

### (Surface-treatment solution for galvanized steel sheet)

The surface-treatment solution for a galvanized steel sheet according to an embodiment of the present disclosure includes a first surface-treatment solution (X) and a second surface-treatment solution (Y). The first surface-treatment solution (X) is applied to a surface of a galvanized steel sheet, then dried, thereby being used for forming a first coating on the galvanized steel sheet. The second surface-treatment solution (Y) is applied on the first coating, then dried, thereby being used for forming a second coating on the first coating.

### [First surface-treatment solution (X)]

The first surface-treatment solution (X) contains a silane coupling agent (A) having a glycidyl group, a tetraalkoxysilane (B), a zirconium carbonate compound (C), a sodium silicate (D1), a vanadium compound (E), a molybdic acid compound (F), and water, and may further contain one or both of a phosphoric acid compound (J) and a fluorine compound (K), as required.

### <Silane coupling agent (A) having a glycidyl group>

The first surface-treatment solution (X) contains a silane coupling agent (A) having a glycidyl group. The silane coupling agent (A) is not particularly limited as long as it is a glycidyl group and a lower alkoxy group having 1 to 5 carbon atoms, preferably 1 to 3 carbon atoms as a hydrolyzable group, directly bonded to a Si element. Examples include 3-glycidoxypropyltrimethoxysilane, 3-glycidoxypropyltriethoxysilane, 3-glycidoxypropylmethyldimethoxysilane, and 2-(3,4-epoxycyclohexyl) ethyltriethoxysilane. Among these, 3-glycidoxypropyltrimethoxysilane and 3-glycidoxypropyltriethoxysilane are preferred from the viewpoint that they are more likely to generate condensation points between silane coupling agents (A) each having a glycidyl group, or condensation points between the tetraalkoxysilane (B) or the zirconium carbonate compound (C) described below, thereby providing high barrier properties after coating formation.

The silane coupling agent (A) having a glycidyl group has an alkoxy group directly bonded to the Si element in the compound, and the alkoxy group forms a silanol group by reacting with water in an aqueous solution. The silanol group reacts with the surface of the galvanized steel sheet, and also undergoes a complex condensation reaction with the tetraalkoxysilane (B) and the zirconium carbonate compound (C) described below.

A mass ratio (A_{S}/X_{S}) of a solid content mass (A_{S}) of the silane coupling agent (A) having a glycidyl group to a total mass (X_{S}) of the solid content mass (A_{S}) of the silane coupling agent (A) having a glycidyl group, a solid content mass (B_{S}) of the tetraalkoxysilane (B), and a ZrO₂ equivalent mass (C_{Z}) of the zirconium carbonate compound (C), is 0.050 to 0.450. When the mass ratio (A_{S}/X_{S}) is less than 0.050, the planar part anti-corrosion property, the corrosion resistance of a worked portion, and the corrosion resistance after alkaline degreasing are poor. The mass ratio (A_{S}/X_{S}) is therefore 0.050 or more. The mass ratio (A_{S}/X_{S}) is preferably 0.060 or more. The mass ratio (A_{S}/X_{S}) is more preferably 0.090 or more. On the other hand, when the mass ratio (A_{S}/X_{S}) exceeds 0.450, heat cracking resistance is poor. The mass ratio (A_{S}/X_{S}) is therefore 0.450 or less. The mass ratio (A_{S}/X_{S}) is preferably 0.380 or less. The mass ratio (A_{S}/X_{S}) is more preferably 0.290 or less.

### <Tetraalkoxysilane (B)>

The use of the component (A) alone results in poor heat cracking resistance, and therefore the first surface-treatment solution (X) contains the tetraalkoxysilane (B). Without the component (B), the carbon-carbon bonds of the component (A) undergo thermal oxidative decomposition in a heated atmosphere of 500 °C or higher, which can cause large cracks. In contrast, when an appropriate amount of the component (B) is added, a dense coating having high barrier properties can be obtained while keeping the amount of the component (A) added to a level that allows for acceptable heat cracking resistance. The coating obtained from the component (A) and the component (B) is dense, so cracks that occur during heating can be made smaller, no cracks that are visible to the naked eye occur, and excellent heat cracking resistance is achieved.

The tetraalkoxysilane (B) is not particularly limited as long as it has four lower alkoxy groups as hydrolyzable groups directly bonded to the Si element and is represented by a general formula Si(OR)₄ (where R represents the same or different alkyl groups having 1 to 5 carbon atoms). Examples of the tetraalkoxysilane (B) include tetramethoxysilane, tetraethoxysilane, and tetrapropoxysilane, and one or more of these may be used. Among these, tetraethoxysilane and tetramethoxysilane are preferred from the viewpoint that they are more likely to generate condensation points between tetraalkoxysilanes (B) or between the component (A) and component (C) described later, thereby providing high barrier properties after coating formation.

The tetraalkoxysilane (B) has an alkoxy group directly bonded to the Si element in the compound, and the alkoxy group forms a silanol group by reacting with water in an aqueous solution. The silanol group reacts with the surface of the galvanized steel sheet, or undergoes a complex condensation reaction with the component (A) or the component (C) described below.

A mass ratio (B_{S}/X_{S}) of the solid content mass (B_{S}) of the tetraalkoxysilane (B) to the total mass (X_{S}) is 0.010 to 0.190. When the mass ratio (B_{S}/X_{S}) is less than 0.010, the planar part anti-corrosion property, the corrosion resistance of a worked portion, and the corrosion resistance after alkaline degreasing decrease. The mass ratio (B_{S}/X_{S}) is therefore 0.010 or more. The mass ratio (B_{S}/X_{S}) is preferably 0.020 or more. The mass ratio (B_{S}/X_{S}) is more preferably 0.030 or more. On the other hand, when the mass ratio (B_{S}/X_{S}) exceeds 0.190, the heat cracking resistance decreases. The mass ratio (B_{S}/X_{S}) is therefore 0.190 or less. The mass ratio (B_{S}/X_{S}) is preferably 0.150 or less. The mass ratio (B_{S}/X_{S}) is more preferably 0.110 or less.

The component (A) and the component (B) may each be used alone, but it is preferable to subject the component (A) and the component (B) to a condensation reaction to form a low-condensation product, and then add this to the first surface-treatment solution (X), thereby obtaining higher barrier properties after coating formation. This low-condensation product has a polysiloxane bond as a main backbone formed by a condensation reaction between the silanol groups of the component (A) and the component (B), and all of the terminal groups bonded to the Si element may be alkoxy groups, or some of the groups directly bonded to the Si element may be alkoxy groups.

The low-condensation product obtained by the condensation reaction of the component (A) and the component (B) preferably has a degree of condensation of 2 to 30. The degree of condensation is more preferably 2 to 10. When the degree of condensation is 30 or less, the component (A) and the component (B) can be used stably without forming a white precipitate in an aqueous solution. This low-condensation product can be obtained by reacting the component (A), the component (B), and a chelating agent described below at a reaction temperature of 1 °C to 70 °C for about 10 minutes to 20 hours, followed by autoclaving. Examples of chelating agents include hydroxycarboxylic acids such as malic acid, acetic acid, and tartaric acid; monocarboxylic acids; polycarboxylic acids such as dicarboxylic acids and tricarboxylic acids including oxalic acid, malonic acid, succinic acid, citric acid, and adipic acid; and aminocarboxylic acids such as glycine. One or more of these may be used.

The condensation state of this low-condensation product may be measured by gel permeation chromatography (GPC), NMR, and FT-IR, as described in JIS-K7252-4.

The chelating agent that acts to stabilize the low-condensation product acts when the alkoxy groups of the component (A) and the alkoxy groups of the component (B) undergo a hydrolysis reaction in the presence of water and the chelating agent. The reason for the stabilizing effect of the chelating agent is not clear, but it is thought to be due to the chelating agent appropriately coordinating to the silanol groups derived from the component (A) and the component (B) that are generated by the hydrolysis reaction. That is, the appropriate coordination action of the chelating agent to the silanol groups suppresses excessive condensation of the component (A) and the component (B), making it possible to obtain the first surface-treatment solution (X) having excellent storage stability. Further, the quality of the first coating can be stably obtained even after the first surface-treatment solution (X) has been stored for a long period of time.

The chelating agent is effective in securing the corrosion resistance of the first coating, in addition to the storage stability. The reason for this is not clear, but it is thought that the chelating agent also coordinates with the vanadium compound (E) described below. When the first coating is exposed to a corrosion environment, the chelating agent coordinated to the vanadium compound (E) is eluted out together with the vanadium compound (E). This promotes condensation of the component (A) and the component (B) that have lost their ligands within the first coating, which is thought to further enhance the barrier properties of the first coating and contribute to improved corrosion resistance.

### <Zirconium carbonate compound (C)>

The first surface-treatment solution (X) contains the zirconium carbonate compound (C). When the first surface-treatment solution (X) contains the zirconium carbonate compound (C), the first coating that is difficult to dissolve in water is obtained, thereby improving the planar part anti-corrosion property and the anti-water stain property. Further, by using the sodium silicate (D1), described later, in combination, the first coating excelling particularly in long-term perspiration resistance can be obtained.

The first coating containing the components (A) to (C) normally has appropriate hardness and flexibility, high barrier properties, and excellent planar part anti-corrosion property, worked portion corrosion resistance, and corrosion resistance after alkaline degreasing. The barrier properties are enhanced because the zirconium carbonate compound (C) has a hydroxyl group that serves as a condensation point with a silanol group. Further, when the zirconium carbonate compound (C) is dried, zirconium oxide and zirconium hydroxide are generated. Therefore, even when heated to temperatures exceeding 500 °C, the dense coating of the tetraalkoxysilane (B) and the zirconium carbonate compound (C) prevents the formation of visually observable cracks, resulting in excellent heat cracking resistance. Examples of the zirconium carbonate compound (C) include salts of zirconium carbonate such as sodium, potassium, lithium, and ammonium, and one or more of these may be used. Among these, ammonium zirconium carbonate and potassium zirconium carbonate are preferred in terms of coating formation, anti-water stain property, and the like.

A mass ratio (C_{Z}/X_{S}) of the ZrO₂ equivalent mass (C_{Z}) of the zirconium carbonate compound (C) to the total mass (X_{S}) is 0.460 to 0.910. When the mass ratio (C_{Z}/X_{S}) is less than 0.460, the barrier properties derived from the zirconium carbonate compound (C) become insufficient, and the corrosion resistance after alkaline degreasing decreases. The mass ratio (C_{Z}/X_{S}) is therefore 0.460 or more. The mass ratio (C_{Z}/X_{S}) is preferably 0.580 or more. The mass ratio (C_{Z}/X_{S}) is more preferably 0.630 or more. On the other hand, when the mass ratio (C_{Z}/X_{S}) exceeds 0.910, the content of hard components derived from the zirconium carbonate compound is large, and good coating adhesion property cannot be obtained. The mass ratio (C_{Z}/X_{S}) is therefore 0.910 or less. The mass ratio (C_{Z}/X_{S}) is preferably 0.900 or less. The mass ratio (C_{Z}/X_{S}) is more preferably 0.870 or less.

### <Sodium silicate (D1)>

The first surface-treatment solution (X) contains the sodium silicate (D1). The sodium contained in the sodium silicate (D1) bonds to oxygen atoms of SiO₄ tetrahedra that have been separated from the SiO₄ network by heat. This prevents recombination of the SiO₄ network. This action imparts flowability to the silicate glass, lowering the softening temperature of the silicate glass from 1700 °C or higher to 500 °C to 700 °C. According to the present disclosure, this action is utilized, and it is thought that, when the first coating that contains the components (A) to (C), is hard, and has a low coefficient of thermal expansion, is heated to 500 °C or higher, flowability is imparted to the first coating, thereby providing excellent heat cracking resistance.

Although the sodium silicate (D1) used according to the present disclosure is a highly water-soluble component, it has an etching ability with respect to zinc. Therefore, when the first surface-treatment solution (X) comes into contact with the surface of the zinc or zinc alloy coated or plated layer and dries, zinc ions eluted into the first surface-treatment solution (X) are fixed as sparingly soluble metal silicate salts, thereby contributing to the adhesion of the first coating. Further, the inventors have discovered that when the sodium silicate (D1) is contained in the first surface-treatment solution (X) in combination with the components (A) to (C), the formation of a Si-enriched layer is promoted in the surface layer of the first coating. Further, the inventors discovered that the presence of the Si-enriched layer improves the long-term perspiration resistance. This is presumably because the silanol groups of the sodium silicate (D1), the silane coupling agent (A), the silanol groups of the tetraalkoxysilane (B), and the hydroxyl groups of the zirconium carbonate compound (C) condense to incorporate the sodium silicate (D1), forming a denser network. Further, in a corrosion environment, the sodium silicate (D1) fixed in the first coating as described above is appropriately eluted, and the action of manipulating the pH of the surface of the zinc or zinc alloy coated or plated layer toward the alkaline side also contributes to delaying and suppressing the anodic reaction of zinc.

The sodium silicate (D1) used according to the present disclosure contains SiO₂ and Na₂O, and the molar ratio of SiO₂/Na₂O is preferably from 1 to 4. When SiO₂/Na₂O is 4 or less, it is possible to obtain a favorable effect on the heat cracking resistance. On the other hand, when SiO₂/Na₂O is 1 or more, the sodium silicate (D1) can be suitably fixed in the first coating while securing the effect on the heat cracking resistance, and a decrease in the blackening resistance, the anti-water stain property, and the long-term perspiration resistance can be suitably suppressed. Therefore, SiO₂/Na₂O is preferably 1 or more. SiO₂/Na₂O is more preferably 2 or more. Examples of the sodium silicate (D1) that satisfy the above conditions include No. 2 sodium silicate and No. 3 sodium silicate, and one or more of these may be used.

A mass ratio (D1_{S}/X_{S}) of a solid content mass (D1_{S}) of the sodium silicate (D1) to the total mass (X_{S}) is 0.040 to 0.630. When the mass ratio (D1_{S}/X_{S}) is less than 0.040, the planar part anti-corrosion property, the worked portion corrosion resistance, and the corrosion resistance after alkaline degreasing decrease. The mass ratio (D1_{S}/X_{S}) is therefore 0.040 or more. The mass ratio (D1_{S}/X_{S}) is preferably 0.050 or more. On the other hand, when the mass ratio (D1_{S}/X_{S}) exceeds 0.630, the sodium silicate becomes excessive and becomes difficult to fix in the first coating, resulting in poor blackening resistance, anti-water stain property, and long-term perspiration resistance. Further, a large amount of Na ions become present in the first surface-treatment solution (X), and therefore the storage stability of the first surface-treatment solution (X) is reduced. The mass ratio (D1_{S}/X_{S}) is therefore 0.630 or less. The mass ratio (D1_{S}/X_{S}) is preferably 0.470 or less.

### <Vanadium compound (E)>

The first surface-treatment solution (X) contains the vanadium compound (E). The vanadium compound (E) is uniformly dispersed in the first coating, but elutes moderately in a corrosion environment and bonds with zinc ions eluted in the corrosion environment to form a dense passive coating, thereby improving the planar part anti-corrosion property, the worked portion corrosion resistance, and the corrosion resistance after alkaline degreasing. Examples of the vanadium compound (E) include ammonium metavanadate, sodium metavanadate, vanadium acetylacetonate, and metavanadyl acetylacetonate, and one or more of these may be used.

A mass ratio (E_{V}/(X_{S} + D1_{S})) of a V equivalent mass (E_{V}) of the vanadium compound (E) to a total mass (X_{S} + D1_{S}) of the total mass (X_{S}) and the solid content mass (D1_{S}) of the sodium silicate (D1) is 0.006 to 0.094. When the mass ratio (E_{V}/(X_{S} + D1_{S})) is less than 0.006, the effect of forming a passive coating of zinc ions is insufficient, resulting in a decrease in the planar part anti-corrosion property, the worked portion corrosion resistance, and the corrosion resistance after alkaline degreasing. The mass ratio (E_{V}/(X_{S} + D1_{S})) is therefore 0.006 or more. The mass ratio (E_{V}/(X_{S} + D1_{S})) is preferably 0.008 or more. The mass ratio (E_{V}/(X_{S} + D1_{S})) is more preferably 0.012 or more. On the other hand, when the mass ratio (E_{V}/(X_{S} + D1_{S})) exceeds 0.094, good blackening resistance and anti-water stain property cannot be obtained. Further, when heated above 500 °C, oxidation discoloration of vanadium occurs, and therefore the heat discoloration resistance also decreases. The mass ratio (E_{V}/(X_{S} + D1_{S})) is therefore 0.094 or less. The mass ratio (E_{V}/(X_{S} + D1_{S})) is preferably 0.071 or less. The mass ratio (E_{V}/(X_{S} + D1_{S})) is more preferably 0.047 or less.

### <Molybdic acid compound (F)>

The first surface-treatment solution (X) contains the molybdic acid compound (F). By containing the molybdic acid compound (F), the blackening resistance is improved. Examples of the molybdic acid compound (F) include molybdic acid, ammonium molybdate, sodium molybdate, potassium molybdate, magnesium molybdate, and zinc molybdate. According to the present disclosure, it is preferable to use one or more selected from among these.

The black patina phenomenon of the zinc or zinc alloy coated or plated layer is thought to be due to the production of oxygen-deficient zinc oxide when the zinc or zinc alloy coated or plated layer is exposed to a high-temperature, high-humidity atmosphere. Molybdenum is a second transition metal with various valences, and in air it exists in combination with oxygen as MoO₂ or MoO₃. According to the present disclosure, molybdates such as MoO₄²⁻ are used. It is thought that after being uniformly added to the first coating, the molybdate is reduced to a molybdenum oxide such as MoO₃ in a high-temperature, high-humidity atmosphere. This action is thought to provide an appropriate amount of oxygen to the zinc on the surface of the zinc or zinc alloy coated or plated layer, thereby suppressing the formation of oxygen-deficient zinc oxide. On the other hand, when molybdate is added in excess, the planar part anti-corrosion property, the worked portion corrosion resistance, and the corrosion resistance after alkaline degreasing cannot be obtained.

A mass ratio (F_{M}/(X_{S} + D1_{S})) of a Mo equivalent mass (F_{M}) of the molybdic acid compound (F) to the total mass (X_{S} + D1_{S}) of the total mass (X_{S}) and the solid content mass (D1_{S}) of the sodium silicate (D1) is 0.030 to 0.280. When the mass ratio (F_{M}/(X_{S} + D1_{S})) is less than 0.030, excellent blackening resistance cannot be obtained. The mass ratio (F_{M}/(X_{S} + D1_{S})) is therefore 0.030 or more. The mass ratio (F_{M}/(X_{S} + D1_{S})) is preferably 0.040 or more. The mass ratio (F_{M}/(X_{S} + D1_{S})) is more preferably 0.050 or more. On the other hand, when the mass ratio (F_{M}/(X_{S} + D1_{S})) exceeds 0.280, good planar part anti-corrosion property, worked portion corrosion resistance, and corrosion resistance after alkaline degreasing cannot be obtained. The mass ratio (F_{M}/(X_{S} + D1_{S})) is therefore 0.280 or less. The mass ratio (F_{M}/(X_{S} + D1_{S})) is preferably 0.240 or less. The mass ratio (F_{M}/(X_{S} + D1_{S})) is more preferably 0.190 or less.

### <Phosphoric acid compound (J)>

The first surface-treatment solution (X) may contain the phosphoric acid compound (J) for the purpose of further improving the corrosion resistance of the first coating. The phosphoric acid compound (J) elutes moderately in a corrosion environment, bonds with zinc ions eluted in the corrosion environment, and forms a sparingly soluble zinc phosphate coating, which covers coating defects, thereby improving the planar part anti-corrosion property, the worked portion corrosion resistance, and the corrosion resistance after alkaline degreasing.

The phosphoric acid compound (J) may be at least one selected from inorganic phosphoric acid compounds and organic phosphoric acid compounds. Examples of the inorganic phosphoric acid compound include phosphoric acid; primary phosphate; secondary phosphate; tertiary phosphate; condensed phosphate such as pyrophosphoric acid, pyrophosphate, tripolyphosphoric acid, or tripolyphosphate; phosphorous acid; phosphite; hypophosphorous acid; and hypophosphite. Examples of the organic phosphoric acid compound include phosphonic acid, diphosphonic acid, phosphonobutane tricarboxylic acid, ethylenediaminetetramylenephosphonic acid, methyldiphosphonic acid, methylenephosphonic acid, ethylidenediphosphonic acid, and ammonium salts and alkali metal salts thereof. With regard to anti-flaky coating exfoliation property, from the viewpoint of easier formation of a sparingly soluble metal salt, it is preferable to use an inorganic phosphoric acid compound such as phosphoric acid or ammonium dihydrogen phosphate, and when an organic phosphoric acid compound is used, from the viewpoint of better anti-water stain property and storage stability of the first surface-treatment solution (X), it is preferable to use a diphosphonic acid.

A mass ratio (J_{S}/X_{S}) of a solid content mass (J_{S}) of the phosphoric acid compound (J) to the total mass (X_{S}) is preferably 0.140 to 0.770. When the mass ratio (J_{S}/X_{S}) is 0.140 or more, it is possible to obtain favorable planar part anti-corrosion property, worked portion corrosion resistance, and corrosion resistance after alkaline degreasing. The mass ratio (J_{S}/X_{S}) is therefore preferably 0.140 or greater. The mass ratio (J_{S}/X_{S}) is more preferably 0.180 or greater. The mass ratio (J_{S}/X_{S}) is even more preferably 0.280 or greater. On the other hand, when the mass ratio (J_{S}/X_{S}) is 0.770 or less, the heat discoloration resistance, the blackening resistance, the anti-water stain property, the long-term perspiration resistance, and the coating adhesion property can be favorably obtained. The mass ratio (J_{S}/X_{S}) is therefore preferably 0.770 or less. The mass ratio (J_{S}/X_{S}) is more preferably 0.720 or less. The mass ratio (J_{S}/X_{S}) is even more preferably 0.660 or less.

### <Fluorine compound (K)>

The first surface-treatment solution (X) may contain the fluorine compound (K) for the purpose of further improving the adhesion between the first coating and the surface of the galvanized steel sheet. The fluorine compound (K) slightly etches the zinc or zinc alloy coated or plated surface, forming fine irregularities on the surface of the zinc or zinc alloy coated or plated layer, thereby improving adhesion through an anchoring effect.

From the viewpoint of suppressing excessive elution of the coating or plating, examples of the fluorine compound (K) include hydrofluoric acid, fluorosilicic acid, ammonium fluoride, lithium fluoride, sodium fluoride, potassium fluoride, ammonium bifluoride, sodium bifluoride, potassium bifluoride, fluorotitanic acid, ammonium fluorotitanate, fluorozirconic acid, and ammonium fluorozirconate. According to the present disclosure, it is preferable to use one or more selected from among these.

A mass ratio (K_{S}/X_{S}) of a solid content mass (K_{S}) of the fluorine compound (K) to the total mass (X_{S}) is preferably 0.040 to 0.610. When the mass ratio (K_{S}/X_{S}) is 0.040 or more, it is possible to obtain favorable long-term perspiration resistance and coating adhesion property. The mass ratio (K_{S}/X_{S}) is therefore preferably 0.040 or more. The mass ratio (K_{S}/X_{S}) is more preferably 0.050 or more. The mass ratio (K_{S}/X_{S}) is even more preferably 0.080 or more. On the other hand, when the mass ratio (K_{S}/X_{S}) is 0.610 or less, the planar part anti-corrosion property, the worked portion corrosion resistance, the corrosion resistance after alkaline degreasing, the blackening resistance, and the anti-water stain property can be favorably obtained. The mass ratio (K_{S}/X_{S}) is therefore preferably 0.610 or less. The mass ratio (K_{S}/X_{S}) is more preferably 0.450 or less. The mass ratio (K_{S}/X_{S}) is even more preferably 0.300 or less.

### <pH 8.0 to 10.0>

The first surface treatment solution (X) can be obtained by mixing the above-mentioned components in water such as deionized water or distilled water. The solid content of the first surface-treatment solution (X) may be appropriately selected. The solid content is preferably 5 mass% or more. The solid content is preferably 20 mass% or less. Further, the pH of the first surface-treatment solution (X) is preferably 8.0 or higher. The pH is preferably 10.0 or lower. When the pH of the first surface-treatment solution (X) is 8.0 or higher, the storage stability of the first surface-treatment solution (X) can be favorably obtained. The pH of the first surface-treatment solution (X) is therefore preferably 8.0 or higher. The pH is more preferably 8.5 or higher. On the other hand, when the pH of the first surface-treatment solution (X) is 10.0 or lower, the storage stability of the first surface-treatment solution (X) is favorably obtainable, and further, etching of the zinc or zinc alloy coated or plated layer is favorable, and the planar part anti-corrosion property, the worked portion corrosion resistance, and the corrosion resistance after alkaline degreasing are favorably obtainable. The pH of the first surface-treatment solution (X) is therefore preferably 10.0 or lower. The pH is more preferably 9.5 or lower. When adjusting the pH, ammonia or a salt thereof and one or more of the chelating agents described above may be used as appropriate.

Further, additives such as alcohol, ketone, 2-ethoxyethanol, amine-based water-soluble solvent, defoamer, antibacterial and antifungal agent, colorant, wettability enhancer for uniform coating, resin, surfactant, and the like may be added to the first surface treatment solution (X) as required. However, it is important that these additives are added only to an extent that does not adversely affect quality obtainable according to the present disclosure. The maximum amount added is preferably less than 5 mass% with respect to the total solid content of the first surface-treatment solution (X).

Further, the first surface-treatment solution (X) may contain a trace amount of at least one of an anionic polyurethane resin (G), a silicone resin (H), a crosslinking agent (I), and a wax (L) contained in the second surface-treatment solution (Y) described below. In such a case, the quality obtainable according to the present disclosure is not adversely affected as long as the total mass of the solid content thereof is 30 mass% or less, relative to the total solid content of the first surface-treatment solution (X). Therefore, when the first surface-treatment solution (X) contains one or more of the anionic polyurethane resin (G), the silicone resin (H), the crosslinking agent (I), and the wax (L), relative to the total solid content of the first surface-treatment solution (X), the total mass of the solid content thereof is preferably 30 mass% or less. The total solid content mass is more preferably 20 mass% or less. The total solid content mass is even more preferably 10 mass% or less. The total solid content mass is most preferably 5 mass% or less.

### [Second surface-treatment solution (Y)]

The second surface-treatment solution (Y) contains the sodium silicate (D2), the anionic polyurethane resin (G), and water, and may further contain, as required, one or more selected from the group consisting of the silicone resin (H), the crosslinking agent (I), and the wax (L).

### <Sodium silicate (D2)>

The second surface-treatment solution (Y) contains the sodium silicate (D2). The sodium silicate (D2) has a silanol group that strengthens the adhesion of the second coating to the first coating, contributing to the long-term perspiration resistance. Further, when used in combination with the anionic polyurethane resin (G) described below, the high cohesiveness of the urethane bonds in the anionic polyurethane resin (G) allows the sodium silicate (D2) to be incorporated into a dense polyurethane resin coating that has high barrier properties. In a corrosion environment, the sodium silicate (D2) fixed in the second coating as described above is appropriately eluted, and the action of manipulating the pH of the surface of the zinc or zinc alloy coated or plated layer toward the alkaline side also contributes to delaying and suppressing the anodic reaction of zinc.

The sodium silicate (D2) used according to the present disclosure contains SiO₂ and Na₂O, and the molar ratio of SiO₂/Na₂O is preferably from 1 to 4. When SiO₂/Na₂O is 4 or less, it is possible to obtain a favorable effect on the heat cracking resistance. On the other hand, when SiO₂/Na₂O is 1 or more, the sodium silicate (D2) can be suitably fixed in the second coating while securing the effect on the heat cracking resistance, and a decrease in the blackening resistance, the anti-water stain property, and the long-term perspiration resistance can be suitably suppressed. Therefore, SiO₂/Na₂O is preferably 1 or more. SiO₂/Na₂O is more preferably 2 or more. Examples of the sodium silicate (D2) that satisfy the above conditions include No. 2 sodium silicate and No. 3 sodium silicate, and one or more of these may be used.

The sodium silicate (D1) in the first surface-treatment solution (X) and the sodium silicate (D2) in the second surface-treatment solution (Y) may be the same or different. In order to effectively improve the long-term perspiration resistance, it is effective to layer coatings having different constituent components, and therefore it is preferable that the sodium silicate (D1) in the first surface-treatment solution (X) and the sodium silicate (D2) in the second surface-treatment solution (Y) are different.

A mass ratio (D2_{S}/G_{S}) of a solid content mass (D2_{S}) of the sodium silicate (D2) to a solid content mass (G_{S}) of the anionic polyurethane resin (G) is 0.010 to 0.100. When the mass ratio (D2_{S}/G_{S}) is less than 0.010, the planar part anti-corrosion property and the corrosion resistance after alkaline degreasing decrease. The mass ratio (D2_{S}/G_{S}) is therefore 0.010 or more. On the other hand, when the mass ratio (D2_{S}/G_{S}) exceeds 0.100, the sodium silicate (D2) becomes excessive and becomes difficult to fix in the second coating, resulting in poor blackening resistance, anti-water stain property, and long-term perspiration resistance. Further, a large amount of Na ions become present in the second surface-treatment solution (Y), and therefore the storage stability of the second surface-treatment solution (Y) is reduced. The mass ratio (D2_{S}/G_{S}) is therefore 0.100 or less. The mass ratio (D2_{S}/G_{S}) is preferably 0.070 or less. The mass ratio (D2_{S}/G_{S}) is more preferably 0.050 or less.

### <Anionic polyurethane resin (G)>

The second surface-treatment solution (Y) contains the anionic polyurethane resin (G) that has excellent barrier properties against sweat components. This makes the second coating denser, contributing to improved long-term perspiration resistance. The polyurethane resin has a high molecular weight and urethane bonds have strong intermolecular cohesive forces, making them dense and providing excellent barrier properties. The polyurethane resin also has strong adhesion to the first coating, making it possible to obtain the second coating having the excellent performance described above.

Examples of the types of polyols that form the basic backbone that determines the properties of urethane resin include polyether polyols, polyester polyols, and polycarbonate polyols. Polyester polyols and polycarbonate polyols have polar groups and therefore, due to intermolecular interactions, a tough second coating is obtainable. Polycarbonate polyols are expensive but have excellent mechanical strength. Polyether polyols have no polar groups and are therefore somewhat inferior in mechanical strength, but are chemically stable in terms of hydrolysis resistance and the like. The second surface-treatment solution (Y) may contain a single anionic polyurethane resin (G) or a combination of two or more different anionic polyurethane resins (G).

The weight-average molecular weight of the anionic polyurethane resin (G) is not particularly limited. When measured by gel permeation chromatography as described in JIS-K7252-4, the weight-average molecular weight is preferably about 5,000 to 500,000. The weight-average molecular weight is more preferably about 10,000 to 300,000. Increasing the weight-average molecular weight can increase the Tg and mechanical properties of the urethane resin, thereby improving the barrier properties of the second coating and further enhancing the planar part anti-corrosion property, the corrosion resistance after alkaline degreasing, the anti-water stain property, the long-term perspiration resistance, solvent resistance, and the like.

The anionic polyurethane resin (G) can be obtained by a typical synthesis method using a polyol such as polyester polyol, polyether polyol, or polycarbonate polyol, and a polyisocyanate as raw materials. Although not intended to be limiting, a more specific synthesis method is, for example, to produce a urethane prepolymer having isocyanato groups at both ends from a polyol and a polyisocyanate, and then react this with a carboxylic acid having two hydroxyl groups or a reactive derivative thereof in a solvent to form a derivative having isocyanato groups at both ends, and then add triethanolamine or the like as a counter cation, and add the mixture to water to form an emulsion, thereby obtaining an anionic polyurethane resin. Thereafter, as required, a diamine may be further added to carry out chain extension.

As polyisocyanate used in producing the anionic polyurethane resin (G), examples include aliphatic, alicyclic and aromatic polyisocyanates, and any of these may be used. Specific examples include tetramethylene diisocyanate, hexamethylene diisocyanate, lysine diisocyanate, hydrogenated xylylene diisocyanate, 1,4-cyclohexylene diisocyanate, 4,4'-dicyclohexylmethane diisocyanate, 2,4'-dicyclohexylmethane diisocyanate, isophorone diisocyanate, 3,3'-dimethoxy-4,4'-biphenylene diisocyanate, 1,5-naphthalene diisocyanate, 1,5-tetrahydronaphthalene diisocyanate, 2,4-tolylene diisocyanate, 2,6-tolylene diisocyanate, 4,4'-diphenylmethane diisocyanate, 2,4'-diphenylmethane diisocyanate, phenylene diisocyanate, xylylene diisocyanate, and tetramethylxylylene diisocyanate. Among these, the use of aliphatic or alicyclic polyisocyanates such as tetramethylene diisocyanate, hexamethylene diisocyanate, lysine diisocyanate, hydrogenated xylene diisocyanate, 1,4-cyclohexylene diisocyanate, 4,4'-dicyclohexylmethane diisocyanate, 2,4'-dicyclohexylmethane diisocyanate, and isophorone diisocyanate is preferred because the second coating is obtainable that excels not only in the planar part anti-corrosion property, the corrosion resistance after alkaline degreasing, and the solvent resistance, but also in the heat discoloration resistance.

As polyester polyol used in producing the anionic polyurethane resin (G), examples include various polyester polyols obtainable by a dehydration condensation reaction between a glycol or triol, such as ethylene glycol, diethylene glycol, or trimethylolpropane, and a dibasic acid, such as adipic acid or phthalic anhydride; and lactone-based polyester polyols obtained by ring-opening polymerization of ε-caprolactam.

As polyether polyol used in producing the anionic polyurethane resin (G), examples include low molecular weight polyols such as 1,2-propanediol, 1,3-propanediol, trimethylolpropane, glycerin, polyglycerin, and pentaerythritol, as well as ethylene oxide and/or propylene oxide adducts of amine compounds such as bisphenol A and ethylenediamine, and polytetramethylene ether glycol.

As polycarbonate polyol used in producing the anionic polyurethane resin (G), examples include those obtained by reacting glycols such as ethylene glycol, diethylene glycol, propylene glycol, dipropylene glycol, neopentyl glycol, methylpentanediol, dimethylbutanediol, butylethylpropanediol, diethylene glycol, triethylene glycol, tetraethylene glycol, 1,4-butanediol, 1,4-cyclohexanediol, and 1,6-hexanediol with diphenyl carbonate, phosgene, or the like.

Carboxylic acid or reactive derivative thereof having two or more, preferably two, hydroxyl groups used in producing the anionic polyurethane resin (G) is used to introduce acidic groups into the component (G) and to make the component (G) water-dispersible. As the carboxylic acid, examples include dimethylolalkanoic acids such as dimethylolpropionic acid, dimethylolbutanoic acid, dimethylolpentanoic acid, and dimethylolhexanoic acid. Further, as reactive derivatives, examples include acid anhydrides. By making the component (G) self-dispersible in water and using as little emulsifier as possible or no emulsifier, the second coating having excellent anti-water stain property is obtainable.

When producing the anionic polyurethane resin (G), a polyamine, water, or the like is used. The polyamine, water, or the like is used to extend the chains of the prepared prepolymer. As polyamine used in producing the anionic polyurethane resin (G), examples include hydrazine, ethylenediamine, propylenediamine, 1,6-hexanediamine, tetramethylenediamine, isophoronediamine, xylylenediamine, piperazine, 1,1'-bicyclohexane-4,4'-diamine, diphenylmethanediamine, ethyltolylenediamine, diethylenetriamine, dipropylenetriamine, triethylenetetramine, and tetraethylenepentamine, and these can be used alone or in combination.

In order to improve the stability of the anionic polyurethane resin (G) during synthesis and also to improve coating-formation properties when the surrounding environment during coating formation is a low-temperature, dry environment, it is preferable to add a coating formation agent during synthesis. As the coating formation agent, examples include 2-butoxyethanol, N-methyl-2-pyrrolidone, diethylene glycol monobutyl ether, and 2,2,4-Trimethyl-1,3-pentanediol monoisobutyrate, with N-methyl-2-pyrrolidone being preferred.

The glass transition temperature (Tg) of the anionic polyurethane resin (G) is preferably 30 °C or higher. The glass transition temperature (Tg) is preferably 130 °C or lower. When the glass transition temperature (Tg) is 30 °C or higher, degradation of the barrier properties of the second coating can be suppressed and sufficient solvent resistance is obtainable. The glass transition temperature (Tg) of the anionic polyurethane resin (G) is therefore preferably 30 °C or higher. The glass transition temperature (Tg) is more preferably 50 °C or higher. On the other hand, when the glass transition temperature (Tg) of the anionic polyurethane resin (G) is 130 °C or lower, the second coating is prevented from becoming excessively hard, and cracks are less likely to occur in the second coating during working, making excellent coating adhesion property obtainable. The glass transition temperature (Tg) of the anionic polyurethane resin (G) is therefore preferably 130 °C or lower. The glass transition temperature (Tg) is more preferably 110 °C or lower. The glass transition temperature can be adjusted by the molecular weight of the polyol used, and the like.

The glass transition temperature (Tg) of the anionic polyurethane resin (G) can be determined from the local maximum value of tanδ by measuring the dynamic viscoelasticity using a dynamic viscoelasticity measuring device (RSAG2, TA Instruments) and using a film prepared by drying at room temperature for 24 hours, then at 80 °C for 6 hours and then at 120 °C for 20 minutes as a measurement sample.

A mass ratio (G_{S}/Y_{S}) of the solid content mass (G_{S}) of the anionic polyurethane resin (G) to a solid content mass (Y_{S}) of the second surface-treatment solution (Y) is 0.900 to 0.980. When the mass ratio (G_{S}/Y_{S}) is less than 0.900, the amount of the anionic polyurethane resin (G) is small, resulting in poor long-term perspiration resistance, and also a decrease in the blackening resistance and the anti-water stain property. The mass ratio (G_{S}/Y_{S}) is therefore 0.900 or more. The mass ratio (G_{S}/Y_{S}) is preferably 0.930 or more. The mass ratio (G_{S}/Y_{S}) is more preferably 0.950 or more. On the other hand, when the mass ratio (G_{S}/Y_{S}) exceeds 0.980, the amount of the sodium silicate (D2) decreases relatively, which decreases the adhesion between the second coating and the first coating, and also decreases the worked portion corrosion resistance and the corrosion resistance after alkaline degreasing. The mass ratio (G_{S}/Y_{S}) is therefore 0.980 or less.

In the second surface-treatment solution (Y), the anionic polyurethane resin (G) preferably contains an anionic polyurethane resin having a carbonate backbone. Anionic polyurethane resin having a carbonate backbone has excellent barrier properties that inhibit the penetration of sweat components or corrosive factors, and is less susceptible to hydrolysis due to the small gaps in the resin caused by the high cohesive force of the carbonate bonds. Therefore, the second coating is obtainable that is resistant to deterioration in high-temperature, high-humidity environments and can maintain excellent long-term perspiration resistance and corrosion resistance for a long period of time. In particular, from the viewpoint of improving the long-term perspiration resistance, it is preferable to combine a polyether polyol and a polycarbonate polyol as the anionic polyurethane resin (G).

A mass ratio of a solid content mass of the anionic polyurethane resin having a carbonate backbone to the solid content mass (G_{S}) of the anionic polyurethane resin (G) is preferably 0.20 to 0.80. When the mass ratio is 0.20 or more, long-term perspiration resistance can be favorably obtained. The mass ratio is therefore preferably 0.20 or more. The mass ratio is more preferably 0.30 or more. On the other hand, when the mass ratio is 0.80 or less, solvent resistance can be favorably obtained. The mass ratio is therefore preferably 0.80 or less. The mass ratio is more preferably 0.70 or less.

### <Silicone resin (H)>

The second surface-treatment solution (Y) may further contain the silicone resin (H). This makes it possible to obtain the second coating that has better anti-water stain property and long-term perspiration resistance. The silicone resin (H) is not particularly limited as long as it has a plurality of siloxane bonds and an organopolysiloxane structure in which organic groups are bonded to silicon (Si). However, the silicone resin (H) preferably has an organopolysiloxane structure in which at least two organic groups are bonded to Si in one molecule. The position at which the organic group is bonded is not particularly limited, and the organic group may be bonded to the main chain, side chain, or terminal end. The silicone resin (H) may be a homopolymer having the organopolysiloxane structure described above, a mixture of a homopolymer having the organopolysiloxane structure and a homopolymer having a polysiloxane structure, or a copolymer (block copolymer or graft polymer) having the organopolysiloxane structure and a polysiloxane structure. The silicone resin (H) may be of either an addition type or a condensation type. Further, the silicone resin (H) may be any of a heat-curing type, a roomtemperature-vulcanizing (RTV) type, or a UV-curing type.

A mass ratio (H_{S}/G_{S}) of a solid content mass (H_{S}) of the silicone resin (H) to the solid content mass (G_{S}) of the anionic polyurethane resin (G) is preferably 0.0030 to 0.0400. When the mass ratio (H_{S}/G_{S}) is 0.0030 or more, excellent water repellency and oil repellency are obtainable, and the effects of improving the anti-water stain property and the long-term perspiration resistance can be favorably obtained. The mass ratio (H_{S}/G_{S}) is therefore preferably 0.0030 or more. The mass ratio (H_{S}/G_{S}) is more preferably 0.0040 or more. On the other hand, when the mass ratio (H_{S}/G_{S}) is 0.0400 or less, oil repellency is not increased too much, and favorable coating adhesion property is obtainable. The mass ratio (H_{S}/G_{S}) is therefore preferably 0.0400 or less. The mass ratio (H_{S}/G_{S}) is more preferably 0.0320 or less.

### <Crosslinking agent (I)>

The second surface-treatment solution (Y) may contain the crosslinking agent (I) that reacts with carboxyl groups, for the purpose of further improving the worked portion corrosion resistance of the second coating. The second coating contains carboxyl groups possessed by the anionic polyurethane resin (G), and the crosslinking agent (I) undergoes a crosslinking reaction with these groups, thereby modifying the organic components of the second coating. That is, the second coating having high barrier properties and flexibility is formed, and cracks in the second coating are suppressed even when bending is carried out, thereby improving the corrosion resistance of a bent portion. The crosslinking agent (I) is preferably a compound having two or more functional groups capable of reacting with a carboxyl group in one molecule. As functional groups capable of reacting with a carboxyl group, examples include an epoxy group, a carbodiimide group, and an oxazoline group. As the crosslinking agent (I), examples include epoxy resins, carbodiimide resins, and oxazoline group-containing polymers, and it is preferable to use one or more selected from these.

A mass ratio (I_{S}/G_{S}) of a solid content mass (I_{S}) of the crosslinking agent (I) to the solid content mass (G_{S}) of the anionic polyurethane resin (G) is preferably 0.0030 to 0.0400. When the mass ratio (I_{S}/G_{S}) is 0.0030 or more, the effects of improving the worked portion corrosion resistance and solvent resistance can be favorably obtained. The mass ratio (I_{S}/G_{S}) is therefore preferably 0.0030 or more. The mass ratio (I_{S}/G_{S}) is more preferably 0.0040 or more. On the other hand, when the mass ratio (I_{S}/G_{S}) is 0.0400 or less, the planar part anti-corrosion property, the worked portion corrosion resistance, the corrosion resistance after alkaline degreasing, and the solvent resistance can be favorably obtained. The mass ratio (I_{S}/G_{S}) is therefore preferably 0.0400 or less. The mass ratio (I_{S}/G_{S}) is more preferably 0.0320 or less.

### <Wax (L)>

The second surface-treatment solution (Y) may contain the wax (L) to improve the lubricity of the surface of the second coating. The wax (L) is not particularly limited as long as it is compatible with the second surface treatment solution (Y). Examples include polyolefin waxes such as polyethylene, montan wax, paraffin wax, microcrystalline wax, carnauba wax, lanolin waxes, silicone waxes, and fluorine waxes, and one or more of these may be favorably used. Further, as polyolefin wax, examples include polyethylene wax, oxidized polyethylene wax, and polypropylene wax, and one or more of these may be used.

A mass ratio (L_{S}/Y_{S}) of a solid content mass (L_{S}) of the wax (L) to the solid content mass (Y_{S}) of the second surface-treatment solution (Y) is preferably 0.010 to 0.120. When the mass ratio (L_{S}/Y_{S}) is 0.010 or more, the effect of improving the lubricity of the surface of the second coating can be favorably obtained. The mass ratio (L_{S}/Y_{S}) is therefore preferably 0.010 or more. On the other hand, when the mass ratio (L_{S}/Y_{S}) is 0.120 or less, the lubricity is not too high, and it is possible to suitably prevent coil collapse during coiling in coil production. Further, the worked portion corrosion resistance and the coating adhesion property can be favorably obtained. The mass ratio (L_{S}/Y_{S}) is therefore preferably 0.120 or less. The mass ratio (L_{S}/Y_{S}) is more preferably 0.090 or less.

The second surface treatment solution (Y) can be obtained by mixing the above-mentioned components in water such as deionized water or distilled water. The solid content of the second surface-treatment solution (Y) may be appropriately selected. The solid content is preferably 5 mass% or more. The solid content is preferably 20 mass% or less. The pH of the second surface-treatment solution (Y) is not particularly limited. The pH is preferably 9.8 or more. The pH is preferably 10.8 or less.

Further, additives such as alcohol, ketone, 2-ethoxyethanol, amine-based water-soluble solvent, defoamer, antibacterial and antifungal agent, colorant, wettability enhancer for uniform coating, resin, surfactant, and the like may be added to the second surface treatment solution (Y) as required. However, it is important that these additives are added only to an extent that does not adversely affect quality obtainable according to the present disclosure. The maximum amount added is preferably less than 5 mass% with respect to the total solid content of the second surface-treatment solution (Y).

### (Method of producing galvanized steel sheet with surface-coating layer)

The method of producing a galvanized steel sheet with a surface-coating layer according to an embodiment of the present disclosure is a method of producing a galvanized steel sheet with a surface-coating layer using the above-mentioned surface-treatment solution for a galvanized steel sheet, and includes: applying the first surface-treatment solution (X) to a surface of a galvanized steel sheet, subsequently drying the applied first surface-treatment solution (X) to form the first coating, subsequently applying the second surface-treatment solution (Y) to the surface of the first coating, and subsequently drying the applied second surface-treatment solution (Y) to form the second coating. The conditions and methods for forming the first coating and the second coating are described in detail below.

Before applying the first surface-treatment solution (X) onto the surface of the galvanized steel sheet, the galvanized steel sheet may be subjected to a pretreatment for removing oil or stains from the surface, as required. Surfaces of galvanized steel sheets are often coated with anti-rust oil to prevent rusting. Even in a case where anti-rust oil is not coated, oil or stains may have adhered during operations. By carrying out the pretreatment, the surface of the galvanized steel sheet is cleaned, facilitating uniform wetting. In the case where the surface of the galvanized steel sheet is free of oil and stains and can be uniformly wetted with the first surface-treatment solution (X), the pretreatment is not particularly required. The method of the pretreatment is not particularly limited, and examples include hot water rinsing, organic solvent cleaning, and alkali degreasing cleaning.

As a method of applying the first surface-treatment solution (X) to the surface of the galvanized steel sheet and a method of applying the second surface-treatment solution (Y) to the surface of the first coating, an appropriately optimized method may be selected depending on the shape of the galvanized steel sheet to be treated and the like, and examples include roll coating, bar coating, dip coating, and spray coating. After the application, coating weight may be adjusted or the appearance or coating thickness may be made uniform using an air knife or squeezing rollers.

After the first surface-treatment solution (X) has been applied to the surface of the galvanized steel sheet, a dryer, or a drying oven such as a hot air oven, a high-frequency induction heating oven, or an infrared oven can be used as a means for drying the applied first surface-treatment solution (X).

The peak metal temperature (PMT) during drying of the first surface-treatment solution (X) is preferably 40 °C or higher. The peak metal temperature is preferably 100 °C or lower. When the peak metal temperature is 40 °C or higher, the condensation reaction of the Si component contained in the first surface-treatment solution (X) proceeds favorably, and a denser Si-enriched layer can be formed. On the other hand, when the peak metal temperature is 100 °C or lower, cracks in the first coating can be suitably suppressed.

The heating time when drying the first surface-treatment solution (X) is selected for appropriately optimized conditions depending on the composition of the galvanized steel sheet used, the process and configuration of the production line, and the like, and from the viewpoint of productivity and the like, the heating time is preferably 0.1 seconds or longer. The heating time is preferably 60 seconds or shorter. The heating time is more preferably 1 second or longer. The heating time is more preferably 30 seconds or shorter.

A coating weight of the first coating after drying, per side, is preferably 0.010 g/m² or more. The coating weight is preferably 0.400 g/m² or less. The coating weight is more preferably 0.030 g/m² or more. The coating weight is more preferably 0.250 g/m² or less. When the coating weight of the first coating is 0.010 g/m² or more, favorable barrier properties are obtainable, and the planar part anti-corrosion property, the corrosion resistance after alkaline degreasing, the blackening resistance, the long-term perspiration resistance, and the anti-water stain property can be favorably obtained. On the other hand, when the coating weight of the first coating is 0.400 g/m² or less, the thickness of the first coating is suitable, and the heat discoloration resistance and the heat cracking resistance can be favorably obtained.

After the second surface-treatment solution (Y) is applied to the surface of the first coating, a dryer, or a drying oven such as a hot air oven, a high-frequency induction heating oven, or an infrared oven can be used as a means for drying the applied second surface-treatment solution (Y).

Here, the peak metal temperature during drying of the second surface-treatment solution (Y) is preferably 60 °C or higher. The peak metal temperature is preferably 200 °C or lower. The peak metal temperature is more preferably 80 °C or higher. The peak metal temperature is more preferably 180 °C or lower. When the peak metal temperature is 60 °C or higher, bonding between the components of the second coating is achieved, and the various properties required by the present disclosure can be favorably obtained. On the other hand, when the peak metal temperature is 200 °C or lower, cracks in the second coating or thermal decomposition of the coating components are unlikely to occur, and the various properties required by the present disclosure can be favorably obtained.

The heating time when drying the second surface-treatment solution (Y) is selected for appropriately optimized conditions depending on the composition of the galvanized steel sheet used, the process and configuration of the production line, and the like, and from the viewpoint of productivity and the like, the heating time is preferably 0.1 seconds or longer. The heating time is preferably 60 seconds or shorter. The heating time is more preferably 1 second or longer. The heating time is more preferably 30 seconds or shorter.

A coating weight of the second coating after drying, per side, is preferably 0.20 g/m² or more. The coating weight is preferably 3.00 g/m² or less. The coating weight is more preferably 0.40 g/m² or more. The coating weight is more preferably 2.00 g/m² or less. When the coating weight of the second coating is 0.20 g/m² or more, sufficient barrier properties are obtained, and the planar part anti-corrosion property, the corrosion resistance after alkaline degreasing, the long-term perspiration resistance, and the anti-water stain property can be favorably obtained. On the other hand, when the coating weight of the second coating is 3.00 g/m² or less, the heat discoloration resistance, the heat cracking resistance, and the coating adhesion property can be favorably obtained.

For processes and conditions not described in the present disclosure, regular methods can be used.

### (Galvanized steel sheet with surface-coating layer)

The galvanized steel sheet with a surface-coating layer according to an embodiment of the present disclosure is a galvanized steel sheet with a surface-coating layer produced by the production method described above, and includes a galvanized steel sheet and a surface-coating layer formed on at least one side of the galvanized steel sheet.

### [Galvanized steel sheet]

The galvanized steel sheet used according to the present disclosure may be an electrogalvanized steel sheet, a hot-dip galvanized steel sheet, a zinc-aluminum alloy coated or plated steel sheet, a zinc-iron alloy coated or plated steel sheet, a zinc-magnesium alloy coated or plated steel sheet, a zinc-aluminum-magnesium alloy coated or plated steel sheet, or the like.

More preferably, a hot-dip Zn-Al alloy coated steel sheet can be used, which has a hot-dip Zn-Al alloy coated layer containing, in mass%, Al: 3.0 % to 12.0 %, Mg: 0.2 % to 6.0 %, and Ni: 0.0 % to 0.1 %, with the balance being Zn and inevitable impurity, on at least one surface of a base steel sheet as a substrate. The use of the hot-dip Zn-Al alloy coated steel sheet has the advantage of being superior in red rust resistance compared to the use of other coated or plated steel sheets. This is advantageous when used outdoors or in other more severe corrosion environments. The hot-dip Zn-Al alloy coated layer does not need to contain Ni, but preferably contains 0.1 mass% or less of Ni, so that the blackening resistance can be favorably obtained. More preferably, the hot-dip Zn-Al alloy coated steel sheet contains a Zn-Al-Mg eutectic alloy in the hot-dip Zn-Al alloy coated layer. The Zn-Al-Mg eutectic alloy is preferably contained in an area ratio of 1 % to 50 % of the surface of the coated layer.

### [Surface-coating layer]

The surface-coating layer according to the present disclosure includes the first coating on the galvanized steel sheet, and the second coating on the first coating. The first coating is obtained by applying the first surface treatment solution (X) described above to the surface of the galvanized steel sheet and drying. The second coating is obtained by applying the second surface-treatment solution (Y) described above to the surface of the first coating and drying. The galvanized steel sheet with a surface-coating layer according to the present embodiment excels in all of heat discoloration resistance, heat cracking resistance, planar part anti-corrosion property, worked portion corrosion resistance, corrosion resistance after alkaline degreasing, blackening resistance, anti-water stain property, solvent resistance, long-term perspiration resistance, and coating adhesion property.

It is important that the surface-coating layer has a Si-enriched layer in the outermost layer of the first coating and that the second coating is mainly resin. In the drying stage of the first coating, the Zr component bonds faster than the Si component, so that regions are formed in which the Si component is incorporated into the network structure of the Zr component and regions are formed in which the Si component is enriched. The second coating contains the anionic polyurethane resin that itself has high barrier properties against sweat components, and the inclusion of the sodium silicate secures strong adhesion to the first coating that has the Si-enriched layer, thereby significantly improving the long-term perspiration resistance.

### EXAMPLES

The advantageous effects of the disclosure are described below by way of Examples and Comparative Examples, though the Examples are merely illustrative and non-limiting.

### (1) Sample sheet

Various galvanized steel sheets listed in Table 1 were used as sample sheets. A zinc or zinc alloy coated layer was formed on both surfaces of the steel sheet (base steel sheet), with the coating weight in Table 1 indicating the coating weight of the zinc or zinc alloy coated layer per surface.

[Table 1]

**Table 1**

| Ref. sign | Galvanized steel sheet | Sheet thickness (mm) | Coating weight per side (g/m²) |
|---|---|---|---|
| (I) | hot-dip galvanized steel sheet | 0.8 | 60 |
| (II) | hot-dip Zn-5.0mass%Al-0.6mass%Mg alloy coated steel sheet | 0.8 | 90 |
| (III) | hot-dip Zn-4.8mass%Al-0.9mass%Mg-0.03mass%Ni alloy coated steel sheet | 0.8 | 90 |
| (IV) | hot-dip Zn-6.0mass%Al-3.0mass%Mg alloy coated steel sheet | 0.8 | 90 |
| (V) | hot-dip Zn-6.0mass%Al-3.0mass%Mg-0.02mass%Ni alloy coated steel sheet | 0.8 | 90 |

### (2) Pretreatment (cleaning)

The surfaces of the sample sheets were treated with Fine Cleaner E6406 produced by Nihon Parkerizing Co., Ltd. to remove oil or stains from the surface. The surfaces of the sample sheets were then washed with tap water to confirm that the surfaces were 100 % wettable with water, and pure water (deionized water) was poured over the surfaces. The sample sheets were then dried in an oven having a 100 °C atmosphere to remove moisture.

### (3) Preparation of surface-treatment solution

The components listed in Table 2 were mixed in water in the respective mix ratios (mass ratios) listed in Table 2 to obtain the first surface-treatment solution (X) having a solid content of 6 mass%. The components listed in Table 3 were mixed in water in the respective mix ratios (mass ratios) listed in Table 3 to obtain the second surface-treatment solution (Y) having a solid content of 15 mass%.

The components listed in Table 4 were mixed in water in the respective mix ratios (mass ratios) listed in Table 4 to obtain the first surface-treatment solutions X48 to X50 having a solid content of 6 mass%. The first surface-treatment solutions X48 and X49 are intended to be prepared by incorporating the components contained in the first surface-treatment solution (X) and the second surface-treatment solution (Y) of the present disclosure into a single surface-treatment solution. In particular, X49 has the same composition as the surface-treatment solution disclosed in PTL 1. X50 is the first surface-treatment solution X1 in Table 2 containing the anionic polyurethane resin (G4) in an amount of 30 mass% relative to the total solid content of X50. In Table 4, following PTL 1, the mass ratio (X_{S}/G_{S}) of the total mass (Xₛ) to the solid mass (G_{S}) of the anionic polyurethane resin (G) is indicated.

The compounds used according to Tables 2 to 4 are described below.

### <Silane coupling agent (A) having a glycidyl group>

A1: 3-glycidoxypropyltriethoxysilane
A2: 3-glycidoxypropyltrimethoxysilane

### <Tetraalkoxysilane (B)>

B1: tetraethoxysilane
B2: tetramethoxysilane

### <Zirconium carbonate compound (C)>

C1: ammonium zirconium carbonate (ZrO₂: 20.0 mass%)
C2: potassium zirconium carbonate (ZrO₂: 20.0 mass%)

### <Sodium silicate (D1, D2)>

D-1: No. 3 sodium silicate (solid content: 38.5 mass%)
D-2: No. 2 sodium silicate (solid content: 40.6 mass%)

### <Vanadium compound (E)>

E1: metavanadyl acetylacetonate (V: 19.2 mass%)
E2: ammonium metavanadate (V: 43.5 mass%)

### <Molybdic acid compound (F)>

F1: ammonium molybdate (Mo: 54.4 mass%)
F2: sodium molybdate (Mo: 43.8 mass%)

### <Anionic polyurethane resin (G)>

### Method of producing anionic polyurethane resin (G1)

100 parts by mass of a polyether polyol obtained from polyethylene glycol and polypropylene glycol and having a number-average molecular weight of 5000, 5 parts by mass of 2,2-dimethyl-1,3-propanediol, 100 parts by mass of 4,4-dicyclohexylmethane diisocyanate, 20 parts by mass of 2,2-dimethylolpropionic acid, and 120 parts by mass of N-methyl-2-pyrrolidone were added to a reactor to obtain a urethane prepolymer having a free isocyanato group content of 5 % relative to the solid content. Next, 16 parts by mass of tetramethylenediamine and 10 parts by mass of triethylamine were added to 500 parts by mass of deionized water, and while stirring with a homogenizer, the urethane prepolymer was added to emulsify and disperse the mixture. Finally, deionized water was added to obtain a water-dispersible anionic polyurethane resin (G1) having a solid content of 25 mass%. In the anionic polyurethane resin (G1), the mass ratio of the solid content mass of the anionic polyurethane resin having a carbonate backbone to the solid content mass (G_{S}) of the anionic polyurethane resin (G1) was 0.4. The glass transition temperature (Tg) of the resulting anionic polyurethane resin (G1) was measured using a dynamic viscoelasticity measuring device and was found to be 95 °C.

### Method of producing anionic polyurethane resin (G2)

A water-dispersible anionic polyurethane resin (G2) having a solid content of 25 mass% was obtained in the same manner as in the method of producing anionic polyurethane resin (G1), except that 20 parts by mass of 1,4-butanediol-2-sulfonic acid was used in the reactor in place of the 20 parts by mass of 2,2-dimethylolpropionic acid. In the anionic polyurethane resin (G2), the mass ratio of the solid content mass of the anionic polyurethane resin having a carbonate backbone to the solid content mass (G_{S}) of the anionic polyurethane resin (G2) was 0.3. The glass transition temperature (Tg) of the resulting anionic polyurethane resin (G2) was measured using a dynamic viscoelasticity measuring device and was found to be 95 °C.

### Method of producing anionic polyurethane resin (G3)

A water-dispersible anionic polyurethane resin (G3) having a solid content of 25 mass% was obtained in the same manner as in the method of producing the anionic polyurethane resin (G1), except that 100 parts by mass of a polyester polyol obtained from 1,6-hexanediol and adipic acid and having a number-average molecular weight of 2220 was used in the reactor in place of the 100 parts by mass of a polyether polyol obtained from polyethylene glycol and polypropylene glycol and having a number-average molecular weight of 5000. In the anionic polyurethane resin (G3), the mass ratio of the solid content mass of the anionic polyurethane resin having a carbonate backbone to the solid content mass (G_{S}) of the anionic polyurethane resin (G3) was 0.5. The glass transition temperature (Tg) of the resulting anionic polyurethane resin (G3) was measured using a dynamic viscoelasticity measuring device and was found to be 70 °C.

### Method of producing anionic polyurethane resin (G4)

A water-dispersible anionic polyurethane resin (G4) having a solid content of 25 mass% was obtained in the same manner as in the method of producing the anionic polyurethane resin (G1), except that 100 parts by mass of a polyether polyol obtained from polyethylene glycol and polypropylene glycol and having a number-average molecular weight of 1560 was used in the reactor in place of the 100 parts by mass of a polyether polyol obtained from polyethylene glycol and polypropylene and having a number-average molecular weight of 5000. In the anionic polyurethane resin (G4), the mass ratio of the solid content mass of the anionic polyurethane resin having a carbonate backbone to the solid content mass (G_{S}) of the anionic polyurethane resin (G4) was 0.4. The glass transition temperature (Tg) of the resulting anionic polyurethane resin (G4) was measured using a dynamic viscoelasticity measuring device and was found to be 105 °C.

### Method of producing anionic polyurethane resin (G5)

A water-dispersible anionic polyurethane resin (G5) having a solids content of 25 mass% was obtained in the same manner as in the method of producing the anionic polyurethane resin (G1), except that 100 parts by mass of a polyester polyol obtained from 1,6-hexanediol and adipic acid and having a number-average molecular weight of 1320 was used in the reactor in place of the 100 parts by mass of a polyether polyol obtained from polyethylene glycol and polypropylene glycol having a number-average molecular weight of 5000. In the anionic polyurethane resin (G5), the mass ratio of the solid content mass of the anionic polyurethane resin having a carbonate backbone to the solid content mass (G_{S}) of the anionic polyurethane resin (G5) was 0.3. The glass transition temperature (Tg) of the resulting anionic polyurethane resin (G5) was measured using a dynamic viscoelasticity measuring device and was found to be 120 °C.

### Method of producing anionic polyurethane resin (G6)

A water-dispersible anionic polyurethane resin (G6) having a solid content of 25 mass% was obtained in the same manner as in the method of producing the anionic polyurethane resin (G1), except that 100 parts by mass of a polyester polyol obtained from 1,6-hexanediol and adipic acid and having a number-average molecular weight of 1000 was used in the reactor in place of the 100 parts by mass of a polyether polyol obtained from polyethylene glycol and polypropylene glycol and having a number-average molecular weight of 5000. In the anionic polyurethane resin (G6), the mass ratio of the solid content mass of the anionic polyurethane resin having a carbonate backbone to the solid content mass (G_{S}) of the anionic polyurethane resin (G6) was 0.4. The glass transition temperature (Tg) of the resulting anionic polyurethane resin (G6) was measured using a dynamic viscoelasticity measuring device and was found to be 140 °C.

### Method of producing anionic polyurethane resin (G7)

A water-dispersible anionic polyurethane resin (G7) having a solid content of 25 mass% was obtained in the same manner as in the method of producing the anionic polyurethane resin (G1), except that 100 parts by mass of a polyether polyol obtained from polyethylene glycol and polypropylene glycol and having a number-average molecular weight of 5900 was used in the reactor in place of the 100 parts by mass of a polyether polyol obtained from polyethylene glycol and polypropylene and having a number-average molecular weight of 5000. In the anionic polyurethane resin (G7), the mass ratio of the solid content mass of the anionic polyurethane resin having a carbonate backbone to the solid content mass (G_{S}) of the anionic polyurethane resin (G7) was 0.5. The glass transition temperature (Tg) of the resulting anionic polyurethane resin (G7) was measured using a dynamic viscoelasticity measuring device and was found to be 40 °C.

### Method of producing anionic polyurethane resin (G8)

A water-dispersible anionic polyurethane resin (G8) having a solid content of 25 mass% was obtained in the same manner as in the method of producing anionic polyurethane resin (G1), except that 100 parts by mass of a polycarbonate polyol obtained from 1,6-hexanediol and phosgene and having a number-average molecular weight of 6600 was used in the reactor in place of the 100 parts by mass of a polyether polyol obtained from polyethylene glycol and polypropylene glycol and having a number-average molecular weight of 5000. In the anionic polyurethane resin (G8), the mass ratio of the solid content mass of the anionic polyurethane resin having a carbonate backbone to the solid content mass (G_{S}) of the anionic polyurethane resin (G8) was 0.6. The glass transition temperature (Tg) of the resulting anionic polyurethane resin (G8) was measured using a dynamic viscoelasticity measuring device and was found to be 20 °C.

### Method of producing anionic polyurethane resin (G9)

A water-dispersible anionic polyurethane resin (G9) having a solid content of 25 mass% was obtained in the same manner as in the method of producing the anionic polyurethane resin (G1), except that 100 parts by mass of a polycarbonate polyol obtained from 1,6-hexanediol and phosgene and having a number-average molecular weight of 5300 was used in the reactor in place of the 100 parts by mass of a polyether polyol obtained from polyethylene glycol and polypropylene glycol and having a number-average molecular weight of 5000. In the anionic polyurethane resin (G9), the mass ratio of the solid content mass of the anionic polyurethane resin having a carbonate backbone to the solid content mass (G_{S}) of the anionic polyurethane resin (G9) was 0.7. The glass transition temperature (Tg) of the resulting anionic polyurethane resin (G9) was measured using a dynamic viscoelasticity measuring device and was found to be 60 °C.

### <Silicone resin (H)>

H1: silicone resin emulsion (solid content: 37 mass%, KM-9782^{®} (KM-9782 is a registered trademark in Japan, other countries, or both) produced by Shin-Etsu Chemical Co., Ltd.)
H2: silicone resin emulsion (solid content: 15 mass%, WACKER^{®} HC 321 (WACKER is a registered trademark in Japan, other countries, or both) produced by Wacker Asahikasei Silicone Co., Ltd.)

### <Crosslinking agent (I)>

I1: epoxy resin (solid content: 100 mass%, Denacol^{®} EX-313 (Denacol is a registered trademark in Japan, other countries, or both) produced by Nagase ChemteX Corporation)
I2: carbodiimide resin (solid content: 40 mass%, CARBODILITE^{®} (CARBODILITE is a registered trademark in Japan, other countries, or both) SV-02 produced by Nisshinbo Chemical Inc.)
I3: oxazoline group-containing polymer (solid content: 40 mass%, EPOCROS^{®} K-2020 (EPOCROS is a registered trademark in Japan, other countries, or both) produced by Nippon Shokubai Co., Ltd.)

### <Phosphoric acid compound (J)>

J1: diphosphonic acid (C₂H₈P₂O₇)
J2: ammonium dihydrogen phosphate (NH₄(H₂PO₄))
J3: phosphoric acid (H₃PO₄)

### <Fluorine compound (K)>

K1: ammonium fluoride
K2: potassium fluoride

### <Wax (L)>

L1: polyethylene wax (solid content: 40.0 mass%, Chemipearl^{®} W900 (Chemipearl is a registered trademark in Japan, other countries, or both) produced by Mitsui Chemicals, Inc.)
L2: microcrystalline wax (solid content: 46.0 mass%, NOPCO^{®} 1245-M-SN (NOPCO is a registered trademark in Japan, other countries, or both) produced by San Nopco Ltd.)

### [Table 2]

**Table 2**

| No. | Components | | | | | | | | Mix ratio | | | | | | | | pH |
|---|---|---|---|---|---|---|---|---|---|---|---|---|---|---|---|---|---|
| | (A) | (B) | (C) | (D1) | (E) | (F) | (J) | (K) | A_{S}/X_{S} | B_{S}/X_{S} | C_{Z}/X_{S} | D1_{S}/X_{S} | E_{V}/(X_{S}+D1_{S}) | F_{M}/(X_{S}+D1_{S}) | J_{S}/X_{S} | K_{S}/X_{S} | |
| X1 | A1 | B1 | C1 | D-1 | E2 | F1 | - | - | 0.170 | 0.060 | 0.770 | 0.160 | 0.024 | 0.060 | - | - | 8.5 |
| X2 | - | B1 | C1 | D-1 | E2 | F1 | - | - | - | 0.090 | 0.910 | 0.160 | 0.024 | 0.060 | - | - | 8.7 |
| X3 | A1 | B1 | C1 | D-1 | E2 | F1 | - | - | 0.040 | 0.080 | 0.880 | 0.160 | 0.024 | 0.060 | - | - | 8.6 |
| X4 | A2 | B1 | C1 | D-1 | E2 | F1 | - | - | 0.170 | 0.060 | 0.770 | 0.160 | 0.024 | 0.060 | - | - | 8.5 |
| X5 | A1 | B1 | C1 | D-1 | E2 | F1 | - | - | 0.310 | 0.050 | 0.640 | 0.160 | 0.024 | 0.060 | - | - | 8.5 |
| X6 | A1 | B1 | C1 | D-1 | E2 | F1 | - | - | 0.410 | 0.040 | 0.550 | 0.160 | 0.024 | 0.060 | - | - | 8.4 |
| X7 | A1 | B1 | C1 | D-1 | E2 | F1 | - | - | 0.460 | 0.060 | 0.480 | 0.160 | 0.024 | 0.060 | - | - | 8.4 |
| X8 | A1 | - | C1 | D-1 | E2 | F1 | - | - | 0.180 | - | 0.820 | 0.160 | 0.024 | 0.060 | - | - | 8.6 |
| X9 | A1 | B1 | C1 | D-1 | E2 | F1 | - | - | 0.070 | 0.009 | 0.920 | 0.160 | 0.024 | 0.060 | - | - | 8.7 |
| X10 | A1 | B2 | C1 | D-1 | E2 | F1 | - | - | 0.170 | 0.060 | 0.770 | 0.160 | 0.024 | 0.060 | - | - | 8.5 |
| X11 | A1 | B1 | C1 | D-1 | E2 | F1 | - | - | 0.160 | 0.120 | 0.720 | 0.160 | 0.024 | 0.060 | - | - | 8.5 |
| X12 | A1 | B1 | C1 | D-1 | E2 | F1 | - | - | 0.160 | 0.170 | 0.670 | 0.160 | 0.024 | 0.060 | - | - | 8.5 |
| X13 | A1 | B1 | C1 | D-1 | E2 | F1 | - | - | 0.350 | 0.200 | 0.450 | 0.160 | 0.024 | 0.060 | - | - | 8.4 |
| X14 | A1 | B1 | C2 | - | E2 | F1 | - | - | 0.170 | 0.060 | 0.770 | - | 0.024 | 0.060 | - | - | 8.5 |
| X15 | A1 | B1 | C1 | D-1 | E2 | F1 | - | - | 0.170 | 0.060 | 0.770 | 0.030 | 0.022 | 0.060 | - | - | 8.5 |
| X16 | A1 | B1 | C1 | D-2 | E2 | F1 | - | - | 0.170 | 0.060 | 0.770 | 0.160 | 0.024 | 0.060 | - | - | 8.5 |
| X17 | A1 | B1 | C1 | D-1 | E2 | F1 | - | - | 0.170 | 0.060 | 0.770 | 0.480 | 0.024 | 0.060 | - | - | 8.5 |
| X18 | A1 | B1 | C1 | D-1 | E2 | F1 | - | - | 0.170 | 0.060 | 0.770 | 0.640 | 0.026 | 0.060 | - | - | 8.5 |
| X19 | A1 | B1 | C2 | D-1 | E2 | F1 | - | - | 0.170 | 0.060 | 0.770 | 0.160 | 0.024 | 0.060 | - | - | 8.5 |
| X20 | A1 | B1 | C1 | D-1 | - | F1 | - | - | 0.170 | 0.060 | 0.770 | 0.160 | - | 0.060 | - | - | 8.5 |
| X21 | A1 | B1 | C1 | D-1 | E2 | F1 | - | - | 0.170 | 0.060 | 0.770 | 0.160 | 0.005 | 0.070 | - | - | 8.5 |
| X22 | A1 | B1 | C1 | D-1 | E1 | F1 | - | - | 0.170 | 0.060 | 0.770 | 0.160 | 0.024 | 0.060 | - | - | 8.5 |
| X23 | A1 | B1 | C1 | D-1 | E2 | F1 | - | - | 0.170 | 0.060 | 0.770 | 0.160 | 0.053 | 0.060 | - | - | 8.5 |
| X24 | A1 | B1 | C1 | D-1 | E2 | F1 | - | - | 0.170 | 0.060 | 0.770 | 0.160 | 0.077 | 0.060 | - | - | 8.4 |

| No. | Components | | | | | | | | Mix ratio | | | | | | | | pH |
|---|---|---|---|---|---|---|---|---|---|---|---|---|---|---|---|---|---|
| | (A) | (B) | (C) | (D1) | (E) | (F) | (J) | (K) | A_{S}/X_{S} | B_{S}/X_{S} | C_{Z}/X_{S} | D1_{S}/X_{S} | E_{V}/(X_{S}+D1_{S}) | F_{M}/(X_{S}+D1_{S}) | J_{S}/X_{S} | K_{S}/X_{S} | |
| X25 | A1 | B1 | C1 | D-1 | E2 | F1 | - | - | 0.170 | 0.060 | 0.770 | 0.160 | 0.098 | 0.070 | - | - | 8.4 |
| X26 | A1 | B1 | C1 | D-1 | E1 | - | - | - | 0.170 | 0.060 | 0.770 | 0.160 | 0.024 | - | - | - | 8.5 |
| X27 | A1 | B1 | C1 | D-1 | E2 | F1 | - | - | 0.170 | 0.060 | 0.770 | 0.160 | 0.024 | 0.020 | - | - | 8.5 |
| X28 | A1 | B1 | C1 | D-1 | E2 | F2 | - | - | 0.170 | 0.060 | 0.770 | 0.160 | 0.024 | 0.060 | - | - | 8.5 |
| X29 | A1 | B1 | C1 | D-1 | E2 | F1 | - | - | 0.170 | 0.060 | 0.770 | 0.160 | 0.024 | 0.210 | - | - | 8.4 |
| X30 | A1 | B1 | C1 | D-1 | E2 | F1 | - | - | 0.170 | 0.060 | 0.770 | 0.160 | 0.024 | 0.250 | - | - | 8.4 |
| X31 | A1 | B1 | C1 | D-1 | E2 | F1 | - | - | 0.170 | 0.060 | 0.770 | 0.160 | 0.024 | 0.290 | - | - | 8.4 |
| X32 | A1 | B1 | C1 | D-1 | E2 | F1 | J1 | - | 0.170 | 0.060 | 0.770 | 0.160 | 0.024 | 0.080 | 0.130 | - | 8.4 |
| X33 | A1 | B1 | C1 | D-1 | E2 | F1 | J1 | - | 0.170 | 0.060 | 0.770 | 0.160 | 0.024 | 0.060 | 0.550 | - | 8.4 |
| X34 | A1 | B1 | C1 | D-1 | E2 | F1 | J2 | K1 | 0.170 | 0.060 | 0.770 | 0.160 | 0.024 | 0.060 | 0.550 | 0.310 | 8.4 |
| X35 | A1 | B1 | C1 | D-1 | E2 | F1 | J3 | K1 | 0.170 | 0.060 | 0.770 | 0.160 | 0.024 | 0.060 | 0.550 | 0.310 | 8.4 |
| X36 | A1 | B1 | C1 | D-1 | E2 | F1 | J1 | - | 0.170 | 0.060 | 0.770 | 0.160 | 0.024 | 0.150 | 0.670 | - | 8.4 |
| X37 | A1 | B1 | C1 | D-1 | E2 | F1 | J1 | - | 0.170 | 0.060 | 0.770 | 0.160 | 0.024 | 0.150 | 0.730 | - | 8.4 |
| X38 | A1 | B1 | C1 | D-1 | E2 | F1 | J1 | - | 0.170 | 0.060 | 0.770 | 0.160 | 0.026 | 0.080 | 0.800 | - | 8.3 |
| X39 | A1 | B1 | C1 | D-1 | E2 | F1 | - | K1 | 0.170 | 0.060 | 0.770 | 0.160 | 0.026 | 0.090 | - | 0.030 | 8.5 |
| X40 | A1 | B1 | C1 | D-1 | E2 | F1 | - | K1 | 0.170 | 0.060 | 0.770 | 0.160 | 0.024 | 0.060 | - | 0.310 | 8.3 |
| X41 | A1 | B1 | C1 | D-1 | E2 | F1 | J1 | K2 | 0.170 | 0.060 | 0.770 | 0.160 | 0.024 | 0.060 | 0.550 | 0.310 | 8.3 |
| X42 | A1 | B1 | C1 | D-1 | E2 | F1 | - | K1 | 0.170 | 0.060 | 0.770 | 0.160 | 0.024 | 0.060 | - | 0.310 | 8.3 |
| X43 | A1 | B1 | C1 | D-1 | E2 | F1 | - | K1 | 0.170 | 0.060 | 0.770 | 0.160 | 0.024 | 0.060 | - | 0.460 | 8.3 |
| X44 | A1 | B1 | C1 | D-1 | E2 | F1 | - | K1 | 0.170 | 0.060 | 0.770 | 0.160 | 0.026 | 0.090 | - | 0.620 | 8.3 |
| X45 | A1 | B1 | C1 | D-1 | E2 | F1 | J1 | K1 | 0.170 | 0.060 | 0.770 | 0.160 | 0.024 | 0.060 | 0.550 | 0.310 | 8.5 |
| X46 | A1 | B1 | C1 | D-1 | E2 | F1 | - | - | 0.170 | 0.060 | 0.770 | 0.160 | 0.026 | 0.070 | - | - | 9.6 |
| X47 | A1 | B1 | C1 | D-1 | E2 | F1 | - | - | 0.170 | 0.060 | 0.770 | 0.160 | 0.026 | 0.070 | - | - | 11 |

### [Table 3]

**Table 3**

| No. | Components | | | | | Mix ratio | | | | | pH |
|---|---|---|---|---|---|---|---|---|---|---|---|
| | (D2) | (G) | (H) | (I) | (L) | D2_{S}/G_{S} | G_{S}/Y_{S} | H_{S}/G_{S} | I_{S}/G_{S} | L_{S}/Y_{S} | |
| Y1 | D-1 | G4 | - | - | - | 0.030 | 0.971 | - | - | - | 10.3 |
| Y2 | D-2 | G4 | - | - | - | 0.030 | 0.971 | - | - | - | 10.3 |
| Y3 | D-1 | G1 | - | - | - | 0.030 | 0.971 | - | - | - | 10.3 |
| Y4 | D-1 | G2 | - | - | - | 0.030 | 0.971 | - | - | - | 10.3 |
| Y5 | D-1 | G3 | - | - | - | 0.030 | 0.971 | - | - | - | 10.3 |
| Y6 | D-1 | G5 | - | - | - | 0.030 | 0.971 | - | - | - | 10.3 |
| Y7 | D-1 | G6 | - | - | - | 0.030 | 0.971 | - | - | - | 10.3 |
| Y8 | D-1 | G7 | - | - | - | 0.030 | 0.971 | - | - | - | 10.3 |
| Y9 | D-1 | G8 | - | - | - | 0.030 | 0.971 | - | - | - | 10.3 |
| Y10 | D-1 | G9 | - | - | - | 0.030 | 0.971 | - | - | - | 10.3 |
| Y11 | D-1 | G4 | - | - | - | 0.120 | 0.892 | - | - | - | 10.3 |
| Y12 | D-1 | G4 | - | - | - | 0.080 | 0.922 | - | - | - | 10.3 |
| Y13 | D-1 | G4 | - | - | - | 0.060 | 0.945 | - | - | - | 10.3 |
| Y14 | D-1 | G4 | - | - | - | 0.010 | 0.990 | - | - | - | 10.3 |
| Y15 | D-1 | G4 | H1 | I3 | - | 0.030 | 0.960 | 0.0020 | 0.0100 | - | 10.3 |
| Y16 | D-1 | G4 | H1 | I3 | - | 0.010 | 0.950 | 0.0340 | 0.0100 | - | 10.3 |
| Y17 | D-1 | G4 | H1 | I3 | - | 0.030 | 0.917 | 0.0500 | 0.0100 | - | 10.3 |
| Y18 | D-1 | G4 | H1 | I3 | - | 0.030 | 0.960 | 0.0100 | 0.0020 | - | 10.3 |
| Y19 | D-1 | G4 | H1 | I3 | - | 0.010 | 0.950 | 0.0100 | 0.0340 | - | 10.3 |
| Y20 | D-1 | G4 | H1 | I3 | - | 0.030 | 0.917 | 0.0100 | 0.0500 | - | 10.3 |
| Y21 | D-1 | G4 | H1 | I3 | - | 0.030 | 0.952 | 0.0100 | 0.0100 | - | 10.3 |
| Y22 | D-1 | G4 | H2 | I3 | - | 0.030 | 0.952 | 0.0100 | 0.0100 | - | 10.3 |
| Y23 | D-1 | G4 | H1 | I1 | - | 0.030 | 0.952 | 0.0100 | 0.0100 | - | 10.3 |
| Y24 | D-1 | G4 | H1 | I2 | - | 0.030 | 0.952 | 0.0100 | 0.0100 | - | 10.3 |
| Y25 | D-1 | G4 | - | - | L1 | 0.030 | 0.942 | - | - | 0.030 | 10.3 |
| Y26 | D-1 | G4 | - | - | L1 | 0.030 | 0.942 | - | - | 0.100 | 10.3 |
| Y27 | D-1 | G4 | - | - | L2 | 0.030 | 0.942 | - | - | 0.030 | 10.3 |
| Y28 | D-1 | G4 | H1 | I3 | L1 | 0.030 | 0.924 | 0.0100 | 0.0100 | 0.030 | 10.3 |
| Y29 | D-1 | G4 | - | - | L1 | 0.030 | 0.845 | - | - | 0.130 | 10.3 |
| Y30 | D-1 | G4 | - | - | - | 0.030 | 0.952 | - | - | - | 8.4 |
| Y31 | D-1 | G4 | - | - | - | 0.030 | 0.952 | - | - | - | 11 |

### [Table 3]

**Table 4**

| No. | Components | | | | | | | Mix ratio | | | | | | | pH |
|---|---|---|---|---|---|---|---|---|---|---|---|---|---|---|---|
| | (A) | (B) | (C) | (D1) | (E) | (F) | (G) | A_{S}/X_{S} | B_{S}/X_{S} | C_{Z}/X_{S} | D1_{S}/X_{S} | E_{V}/(X_{S}+D1_{S}) | F_{M}/(X_{S}+D1_{S}) | X_{S}/G_{S} | |
| X48 | A1 | B1 | C1 | - | E2 | F1 | G4 | 0.637 | 0.121 | 0.242 | - | 0.030 | 0.060 | 0.300 | 8.4 |
| X49 | A1 | B1 | C1 | D-1 | E2 | F1 | G4 | 0.637 | 0.121 | 0.242 | 0.091 | 0.021 | 0.041 | 0.300 | 8.3 |
| X50 | A1 | B1 | C1 | D-1 | E2 | F1 | G4 | 0.170 | 0.060 | 0.770 | 0.160 | 0.024 | 0.060 | 1.150 | 8.4 |

### (4) Treatment method

The steel sheets listed in Table 1 (the steel sheet numbers are indicated in the "Coated or plated steel sheet" column in Table 5) were pretreated to obtain various test sheets. Each of the first surface-treatment solutions (X) listed in Table 2 or Table 4 was applied to the test sheets. Subsequently, without water washing, the sheet was placed in an oven and dried at the peak metal temperature listed in the "PMT" column of Table 5, and the first coating was formed on both sides having the coating weight (per side) listed in Table 5. Following this, the surface of the first coating was coated with the corresponding second surface-treatment solution (Y) in Table 3 by a bar coater and, without water washing, placed in an oven and dried at the peak metal temperature listed in the "PMT" column of Table 5, to form the second coating on both sides having the coating weight (per side) listed in Table 5. The coating weights of the first coating and the second coating were determined by measuring the two-layer coating consisting of the first coating and the second coating with an X-ray fluorescence spectrometer. First, the amount of Zr contained in the two-layer coating was determined using the X-ray fluorescence spectrometer to determine the coating weight of Zr. The Zr contained in the two-layer coating is Zr in the zirconium carbonate compound (C) contained in the first coating, and therefore the coating weight of the first coating was determined by conversion from the Zr coating weight in the two-layer coating. Next, the amount of Si contained in the two-layer coating was determined using the X-ray fluorescence spectrometer to determine the coating weight of Si in the two-layer coating. Further, the Si coating weight due to the Si of the glycidyl group-containing silane coupling agent (A) and the tetraalkoxysilane (B) contained in the first coating was determined from the coating weight of the first coating. The Si coating weight of the second coating was determined by subtracting the Si coating weight of the first coating from the Si coating weight of the two-layer coating. The Si coating weight of the second coating is due to the Si in the sodium silicate (D2) and the silicone resin (H) contained in the second coating, and the coating weight of the second coating was determined by conversion from the Si coating weight of the second coating.

### (5) Evaluation test method

Table 5 indicates the results of the following evaluations (5-1) to (5-11) carried out on samples taken from the obtained galvanized steel sheets with surface-coating layers, and the following evaluation (5-12) carried out on the first surface-treatment solution (X) and the second surface-treatment solution (Y). The evaluations △ and × are undesirable due to insufficient performance.

### (5-1) Heat discoloration resistance

Heat discoloration resistance was evaluated for each sample by: heating the sample in an IR image furnace for 30 seconds at a sheet temperature of 500 °C; holding for 5 minutes; allowing natural cooling to room temperature; and visually observing the surface appearance of the sample. The evaluation criteria are as follows.

### (Evaluation criteria)

⊚: no color change
O: very slightly brownish
O-: slightly brownish
△: discolored to brown
×: discolored to reddish-brown

### (5-2) Heat cracking resistance

Heat cracking resistance was evaluated for each sample by: heating the sample in an IR image furnace for 30 seconds at a sheet temperature of 500 °C; holding for 5 minutes; allowing natural cooling to room temperature; and visually observing the surface appearance of the sample. When cracks could not be visually confirmed, the samples were observed at 1000 times magnification using an optical microscope. The evaluation criteria are as follows.

### (Evaluation criteria)

⊚: no cracks
O: very slight crack
O-: slight crack
△: thin cracks on entire surface
×: wide crack in addition to thin cracks on entire surface

### (5-3) Planar part anti-corrosion property

Each sample, in the form of a flat plate, was subjected to a salt spray test (SST) in accordance with JIS-Z-2371-2000. The planar part anti-corrosion property was evaluated based on a white rust area ratio after 240 hours. The evaluation criteria are as follows.

### (Evaluation criteria)

⊚: white rust area ratio less than 5 %
O: white rust area ratio 5 % or more and less than 10 %
O-: white rust area ratio 10 % or more and less than 25 %
△: white rust area ratio 25 % or more and less than 50 %
×: white rust area ratio 50 % or more and 100 % or less

### (5-4) Worked portion corrosion resistance

Each sample, when bent at 90° at 3R, was subjected to a salt spray test (SST) in accordance with JIS-Z-2371-2000. The corrosion resistance of the bent portion was evaluated based on the area ratio of white rust formed on the top of the bend after 144 hours. The evaluation criteria are as follows.

### (Evaluation criteria)

⊚: white rust area ratio at bent portion less than 5 %
O: white rust area ratio at bent portion 5 % or more and less than 10 %
O-: white rust area ratio at bent portion 10 % or more and less than 25 %
△: white rust area ratio at bent portion 25 % or more and less than 50 %
×: white rust area ratio at bent portion 50 % or more and 100 % or less

### (5-5) Corrosion resistance after alkaline degreasing

An alkaline degreasing agent FC-E6406 (produced by Nihon Parkerizing Co., Ltd.) was dissolved in pure water at a concentration of 20 g/L and heated to 60 °C. Each sample was soaked in this alkaline solution for 2 minutes, then removed, washed with water, and dried. Each sample was subjected to a salt spray test (JIS-Z-2371-2000) and evaluated based on the area ratio of white rust formation after 120 hours. The evaluation criteria were as indicated under (5-3) planar part anti-corrosion property evaluation.

### (5-6) Blackening resistance

Each sample was placed for 24 hours in a thermo-hygrostat controlled at a temperature of 80 °C and a relative humidity of 98 %, and a brightness (L value) change (ΔL = L value after test - L value before test) was calculated. The evaluation criteria are as follows. The L value was measured using SR2000 produced by Nippon Denshoku Industries Co., Ltd. in SCI mode (specular component included).

### (Evaluation criteria)

⊚: -6 < ΔL, and uniform appearance without unevenness
O: -10 < ΔL ≤ -6, and uniform appearance without unevenness
O-: -14 < ΔL ≤ -10, and uniform appearance without unevenness
△: -14 < ΔL ≤ -10, and minute black spots
×: ΔL ≤ -14, or unevenness in appearance

### (5-7) Anti-water stain property

For each sample, as a flat plate, 100 µL of deionized water was dropped onto a surface of the sample, and the sample was placed in a hot air oven with an internal temperature of 100 °C for 10 minutes. After removing the sample from the oven, the water droplet mark was visually observed to evaluate anti-water stain property. The evaluation criteria are as follows.

### (Evaluation criteria)

⊚: no water drop boundary when observed from any angle
O: water drop boundary slightly visible depending on viewing angle
O-: water drop boundary slightly visible from any angle
△: water drop boundary clearly visible from any angle
×: water drop boundary clearly visible beyond dropping range

### (5-8) Solvent resistance

Gauze soaked in ethanol was pressed against the surface of each sample under a load of 4.90 N (500 gf), and the sample was rubbed back and forth ten times while maintaining the load. Marks resulting from the rubbing were evaluated visually. The evaluation criteria are as follows.

### (Evaluation criteria)

⊚: no marks
O: marks clearly visible when viewed from an angle but not when viewed from above
O-: slight marks visible from above
△: marks clearly visible from above
×: coating peeled off

### (5-9) Long-term perspiration resistance

Onto a surface of each sample, 10 µL of artificial sweat according to JIS-B7001-1995 was dropped, and a silicone rubber stopper was pressed onto the drop to create a site contaminated with the artificial sweat over a certain area. The sample was left to stand for 8 days in a thermo-hygrostat controlled at a temperature of 40 °C and a relative humidity of 80 %, and then a change in appearance of the contaminated area was evaluated. The evaluation criteria are as follows.

### (Evaluation criteria)

⊚: no color change
O: very slight discoloration
O-: slight discoloration
△: slight blackening
×: clear blackening

### (5-10) Coating adhesion property

Each sample was coated with a melamine alkyd paint, DELICON^{®} #700 (DELICON is a registered trademark in Japan, other countries, or both; produced by Dai Nippon Toryo Co., Ltd.), and baked at 130 °C for 30 minutes to form a coating having a thickness of 30 µm. Subsequently, the sample was soaked in boiling water for 2 hours, and immediately thereafter, grid-like cuts (10 × 10 cuts at 1 mm intervals) were made down to the steel substrate. Further, the sample was deformed by 5 mm using an Erichsen cupping tester so that the cut portion was on the outer (surface) side, and then adhesion and peeling using adhesive tape was carried out, and the peeled area of the coating was measured. The evaluation criteria are as follows. The Erichsen cupping conditions were in accordance with JIS Z-2247-2006, with a punch diameter of 20 mm, a die diameter of 27 mm, and a draw width of 27 mm.

### (Evaluation criteria)

⊚: no peeling
O: peeled area less than 3 %
O-: peeled area 3 % or more and less than 10 %
△: peeled area 10 % or more and less than 30 %
×: peeled area 30 % or more

### (5-11) Lubricity

A disk-shaped test piece having a diameter of 100 mm was cut out from each sample and molded into a cup shape under the conditions of a punch diameter of 50 mm, a die diameter of 51.91 mm, and a blank holding force of 1 tonne. The appearance of the drawn surface of the molded product (the outer side surface of the cup) was visually inspected and the degree of damage and blackening was evaluated. The evaluation criteria are as follows.

### (Evaluation criteria)

⊚ : substantially no change across entire surface, with uniform appearance
O: slight marking and blackening, with clearly non-uniform appearance
O-: localized marking and blackening, with clearly non-uniform appearance
△: severe marking and blackening mainly at corner portions
×: molding failure due to cracking

### (5-12) Storage stability

Each of the surface treatment solutions listed in Table 2 was stored in a thermostatic chamber at 40 °C for 30 days. After removal, the appearance of each surface-treatment solution was visually inspected and evaluated. The evaluation criteria are as follows.

### (Evaluation criteria)

⊚: no change
O: very small amount of precipitation observed
O-: small amount of precipitation observed
△: small amount of precipitation observed and viscosity increased slightly
×: large amount of precipitation observed or gelling occurred

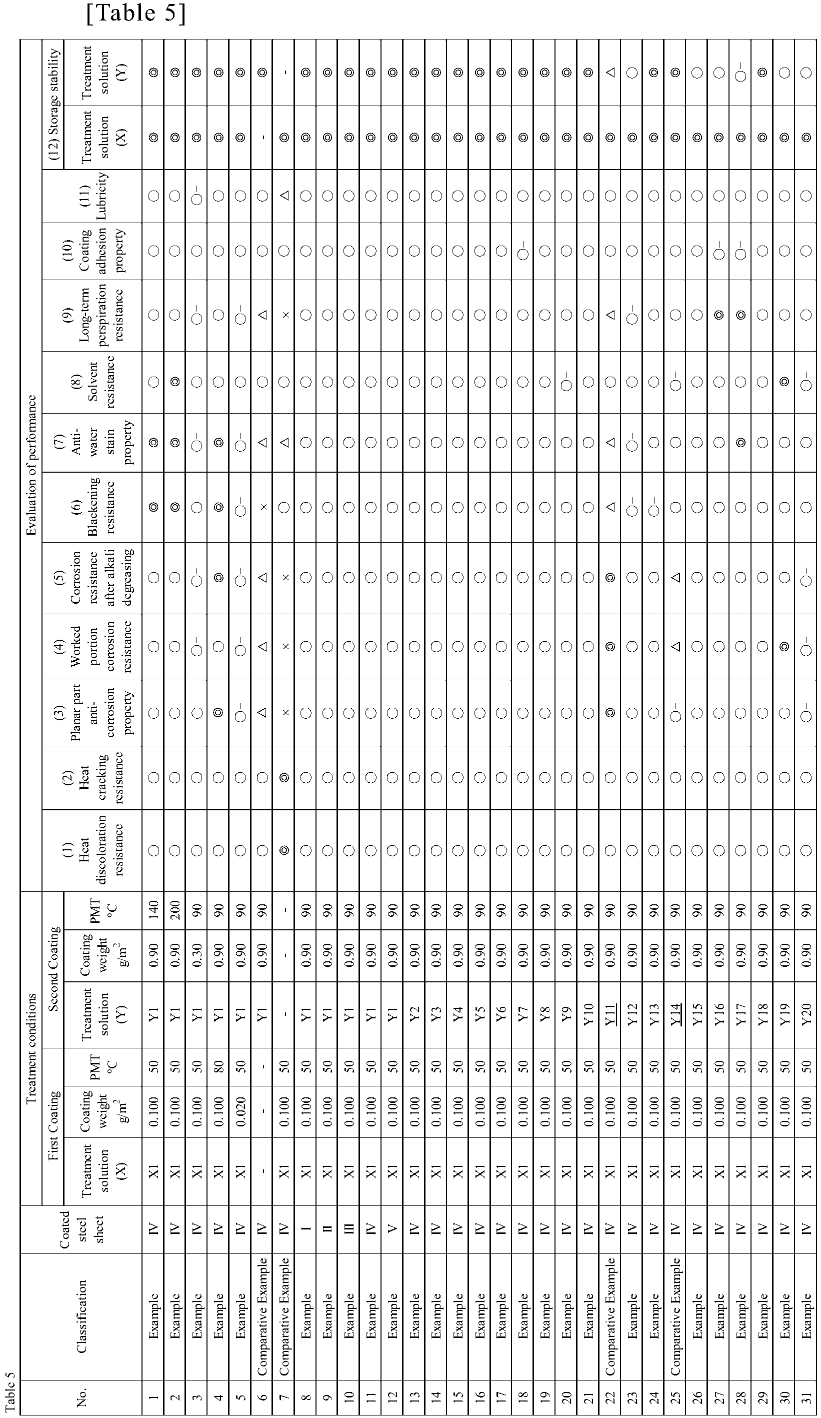

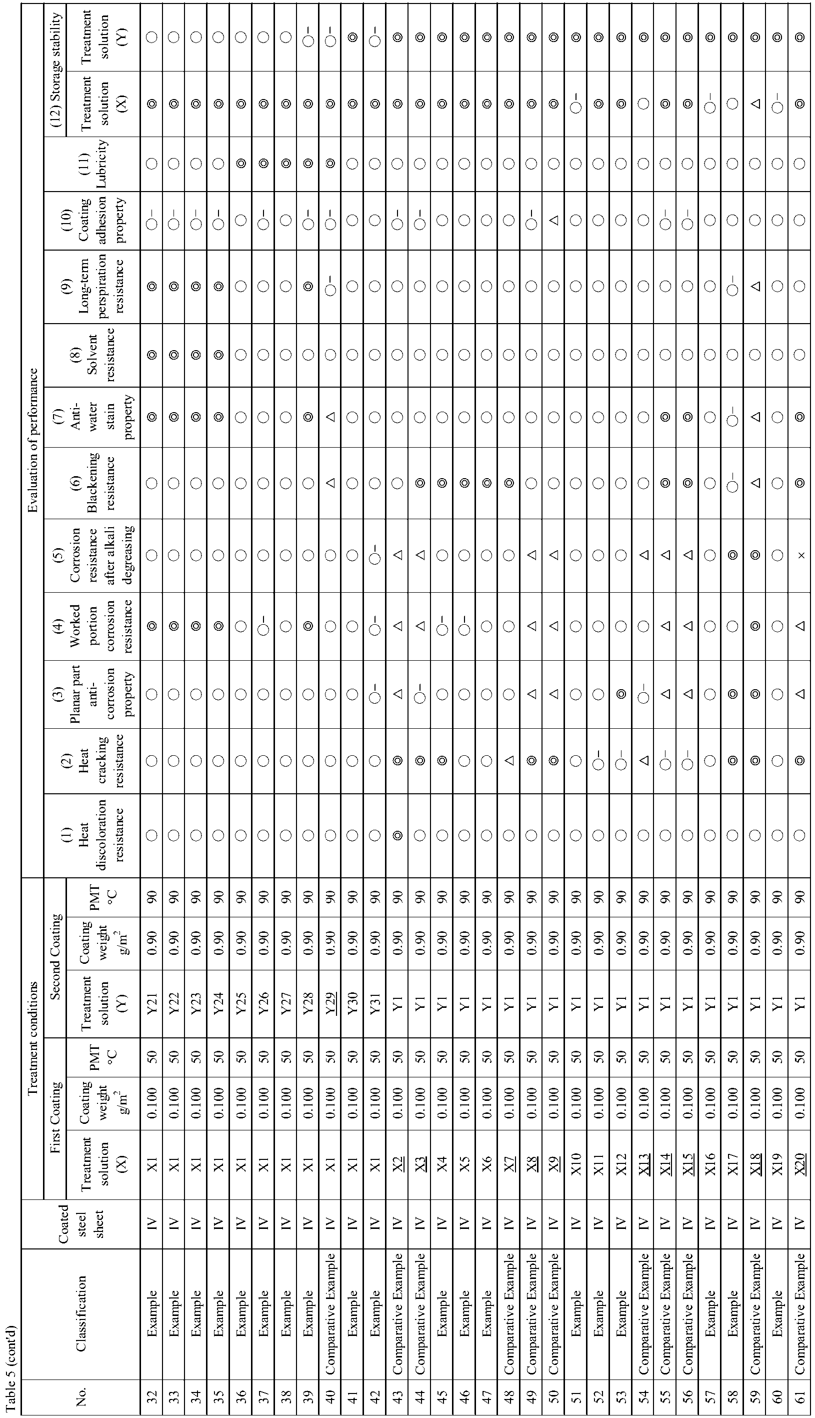

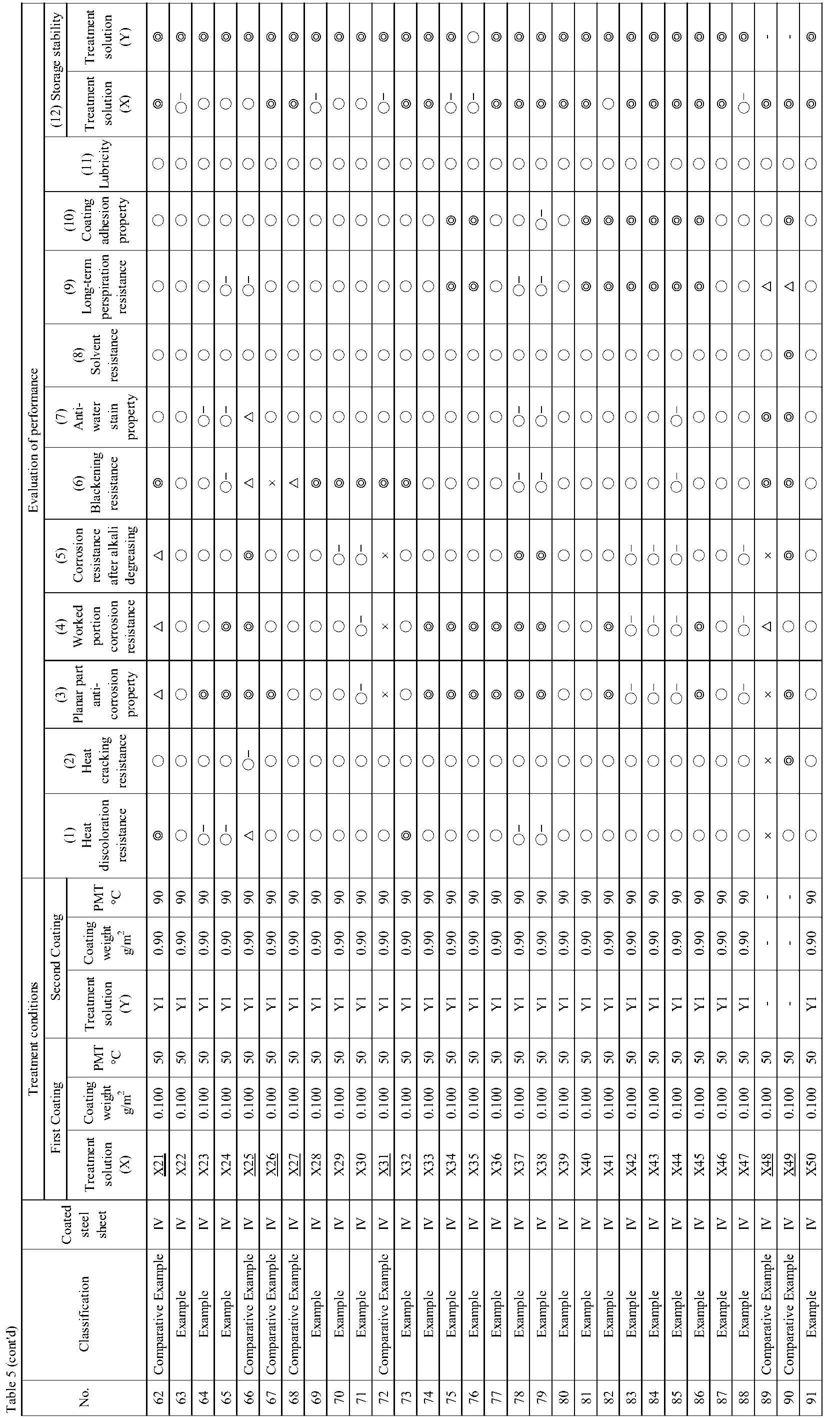

As indicated in Table 5, the Examples according to the present disclosure excel in all of the following: heat discoloration resistance, heat cracking resistance, planar part anti-corrosion property, worked portion corrosion resistance, corrosion resistance after alkaline degreasing, blackening resistance, anti-water stain property, solvent resistance, long-term perspiration resistance, coating adhesion property, and storage stability. Further, the Examples containing wax exhibited particularly good lubricity. In contrast, the Comparative Examples, which had any of the requirements outside the appropriate range, were insufficient in at least one of the above-mentioned properties.

### INDUSTRIAL APPLICABILITY

According to the present disclosure, it is possible to produce a galvanized steel sheet with a surface-coating layer that excels in all of heat discoloration resistance, heat cracking resistance, planar part anti-corrosion property, worked portion corrosion resistance, corrosion resistance after alkaline degreasing, blackening resistance, anti-water stain property, solvent resistance, long-term perspiration resistance, and coating adhesion property.

## Claims

1. A surface-treatment solution for a galvanized steel sheet, comprising a first surface-treatment solution (X) and a second surface-treatment solution (Y), wherein
the first surface-treatment solution (X) contains a silane coupling agent (A) having a glycidyl group, a tetraalkoxysilane (B), a zirconium carbonate compound (C), a sodium silicate (D1), a vanadium compound (E), a molybdic acid compound (F), and water, and the contents of the respective components satisfy the following (1) to (6), and
the second surface-treatment solution (Y) contains a sodium silicate (D2), an anionic polyurethane resin (G), and water, and the contents of the respective components satisfy the following (7) and (8),
(1) a mass ratio (A_{S}/X_{S}) of a solid content mass (A_{S}) of the silane coupling agent (A) having a glycidyl group to a total mass (X_{S}) of the solid content mass (A_{S}) of the silane coupling agent (A) having a glycidyl group, a solid content mass (B_{S}) of the tetraalkoxysilane (B), and a ZrO₂ equivalent mass (C_{Z}) of the zirconium carbonate compound (C), is 0.050 to 0.450,
(2) a mass ratio (B_{S}/X_{S}) of the solid content mass (B_{S}) of the tetraalkoxysilane (B) to the total mass (X_{S}) is 0.010 to 0.190,
(3) a mass ratio (C_{Z}/X_{S}) of the ZrO₂ equivalent mass (C_{Z}) of the zirconium carbonate compound (C) to the total mass (X_{S}) is 0.460 to 0.910,
(4) a mass ratio (D1_{S}/X_{S}) of a solid content mass (D1_{S}) of the sodium silicate (D1) to the total mass (X_{S}) is 0.040 to 0.630,
(5) a mass ratio (E_{V}/(X_{S} + D1_{S})) of a V equivalent mass (E_{V}) of the vanadium compound (E) to a total mass (X_{S} + D1_{S}) of the total mass (X_{S}) and the solid content mass (D1_{S}) of the sodium silicate (D1) is 0.006 to 0.094,
(6) a mass ratio (F_{M}/(X_{S} + D1_{S})) of a Mo equivalent mass (F_{M}) of the molybdic acid compound (F) to the total mass (X_{S} + D1_{S}) of the total mass (X_{S}) and the solid content mass (D1_{S}) of the sodium silicate (D1) is 0.030 to 0.280,
(7) a mass ratio (D2_{S}/G_{S}) of a solid content mass (D2_{S}) of the sodium silicate (D2) to a solid content mass (G_{S}) of the anionic polyurethane resin (G) is 0.010 to 0.100, and
(8) a mass ratio (G_{S}/Y_{S}) of the solid content mass (G_{S}) of the anionic polyurethane resin (G) to a solid content mass (Y_{S}) of the second surface-treatment solution (Y) is 0.900 to 0.980.

2. The surface-treatment solution for a galvanized steel sheet according to claim 1, wherein, in the second surface-treatment solution (Y), the anionic polyurethane resin (G) contains an anionic polyurethane resin having a carbonate backbone, and the content thereof satisfies the following (9),
(9) a mass ratio of a solid content mass of the anionic polyurethane resin having a carbonate backbone to the solid content mass (G_{S}) of the anionic polyurethane resin (G) is 0.20 to 0.80.

3. The surface-treatment solution for a galvanized steel sheet according to claim 1 or 2, wherein the second surface-treatment solution (Y) further contains a silicone resin (H), and the content thereof satisfies the following (10),
(10) a mass ratio (H_{S}/G_{S}) of a solid content mass (H_{S}) of the silicone resin (H) to the solid content mass (G_{S}) of the anionic polyurethane resin (G) is 0.0030 to 0.0400.

4. The surface-treatment solution for a galvanized steel sheet according to any one of claims 1 to 3, wherein the second surface-treatment solution (Y) further contains a crosslinking agent (I), and the content thereof satisfies the following (11),
(11) a mass ratio (I_{S}/G_{S}) of a solid content mass (I_{S}) of the crosslinking agent (I) to the solid content mass (G_{S}) of the anionic polyurethane resin (G) is 0.0030 to 0.0400.

5. The surface-treatment solution for a galvanized steel sheet according to any one of claims 1 to 4, wherein the second surface-treatment solution (Y) further contains a wax (L), and the content thereof satisfies the following (12),
(12) a mass ratio (L_{S}/Y_{S}) of a solid content mass (L_{S}) of the wax (L) to the solid content mass (Y_{S}) of the second surface-treatment solution (Y) is 0.010 to 0.120.

6. The surface-treatment solution for a galvanized steel sheet according to any one of claims 1 to 5, wherein the first surface-treatment solution (X) further contains a phosphoric acid compound (J), and the content thereof satisfies the following (13),
(13) a mass ratio (J_{S}/X_{S}) of a solid content mass (J_{S}) of the phosphoric acid compound (J) to the total mass (X_{S}) is 0.140 to 0.770.

7. The surface-treatment solution for a galvanized steel sheet according to any one of claims 1 to 6, wherein the first surface-treatment solution (X) further contains a fluorine compound (K), and the content thereof satisfies the following (14),
(14) a mass ratio (K_{S}/X_{S}) of a solid content mass (K_{S}) of the fluorine compound (K) to the total mass (X_{S}) is 0.040 to 0.610.

8. A method of producing a galvanized steel sheet with a surface-coating layer using the surface-treatment solution for a galvanized steel sheet according to any one of claims 1 to 7, the method comprising:
applying the first surface-treatment solution (X) to a surface of a galvanized steel sheet;
subsequently drying the applied first surface-treatment solution (X) to form a first coating;
subsequently applying the second surface-treatment solution (Y) to a surface of the first coating; and
subsequently drying the applied second surface-treatment solution (Y) to form a second coating.

9. The method of producing a galvanized steel sheet with a surface-coating layer according to claim 8, wherein a coating weight of the first coating is 0.010 g/m² to 0.400 g/m², and a coating weight of the second coating is 0.20 g/m² to 3.00 g/m².

10. A galvanized steel sheet with a surface-coating layer, produced by the method of producing a galvanized steel sheet with a surface-coating layer according to claim 8 or 9.

11. The galvanized steel sheet with a surface-coating layer according to claim 10, wherein the galvanized steel sheet is a hot-dip Zn-Al alloy coated steel sheet having, on at least one surface of a base steel sheet as a substrate, a hot-dip Zn-Al alloy coated layer having a chemical composition, in mass%, containing Al: 3.0 % to 12.0 %, Mg: 0.2 % to 6.0 %, and Ni: 0.0 % to 0.1 %, with the balance being Zn and inevitable impurity.
